# EUROPÄISCHE PATENTSCHRIFT

(11) **EP 3 190 391 B1**
(45) Veröffentlichungstag und Bekanntmachung des Hinweises auf die Patenterteilung: **13.06.2018**
(21) Anmeldenummer: 16195306.2
(22) Anmeldetag: 24.10.2016
(51) Int. Cl.: G01F 1/684, G01F 5/00

(54) **DURCHFLUSSMENGENMESSEINHEIT UND DURCHFLUSSMENGENSTEUEREINHEIT**
FLOWMETER UNIT AND FLOW CONTROL UNIT
CAPTEUR DE DÉBITMÈTRE ET SON UNITÉ DE COMMANDE

(30) Priorität: 30.11.2015 DE 102015120791
(43) Veröffentlichungstag der Anmeldung: 12.07.2017
(73) Patentinhaber: Axetris AG, 6056 Kägiswil (CH)
(72) Erfinder: Bürgi, Stefan, 6340 Baar (CH); Dänzer, Adrian, 8401 Winterthur (CH); Bächler, Christoph, 8409 Wintherthur (CH)
(74) Vertreter: Klocke, Peter

(56) Entgegenhaltungen:
- EP-A1- 1 503 186
- EP-B1- 0 876 588
- US-A- 5 576 498
- US-B2- 7 059 184

## Beschreibung

Die Erfindung betrifft eine Durchflussmengenmesseinheit zur Feststellung der Durchflussmenge eines Fluids, mit einem Gehäuse, das mindestens zwei miteinander verbindbare Gehäuseteile umfasst, in dem sich von einem Gehäuseeinlass zu einem Gehäuseauslass des Gehäuses ein Durchflusskanal zumindest in einem der Gehäuseteile erstreckt, der in einem Zwischenbereich einen Messkanalzweig und mindestens einen Umgehungskanalzweig aufweist, wobei der Durchflusskanal in einem Zwischenbereich eine Kanalerweiterungskammer aufweist, in der ein Einlegeplattenstapel aus mindestens zwei Einlegeplatten angeordnet ist, die den mindestens einen Umgehungskanalzweig bilden, und an einer Wand des Messkanalzweigs mindestens eine auf einem Substrat angeordnete elektrische Sensoranordnung angeordnet ist. Dabei weist der Durchflusskanal in der Kanalerweiterungskammer einen Verzweigungskanal, von dem der mindestens eine Umgehungskanalzweig orthogonal abzweigt, und einen Mündungskanal, in den der mindestens eine Umgehungskanalzweig orthogonal mündet, auf, wobei zumindest ein Teil der Einlegeplatten in einem Mittelbereich zumindest eine in Längsrichtung der Einlegeplatten verlaufende Plattenlängsausnehmung als Umgehungskanalzweig aufweist.

Die Erfindung betrifft außerdem eine Durchflussmengensteuereinheit zur Steuerung der Durchflussmenge eines Fluids, mit einer Durchflussmengenmesseinheit, die mindestens einen Messkanalzweig mit einer auf einem Substrat angeordneten elektrischen Sensoranordnung aufweist, und mit einer elektrisch betätigbaren Ventileinheit zur Steuerung des Fluids.

Aus dem Stand der Technik sind eine Vielzahl von Vorrichtungen zur Messung des Flusses eines gasförmigen oder flüssigen Mediums bekannt. Diese besitzen in der Regel ein Gehäuse mit einem Durchflusskanal, der einen Hauptkanal und einen parallel zum Hauptkanal geschalteten Messkanalzweig umfasst, wobei der Hauptkanal, der häufig auch als Umgehungskanal oder Bypasskanal bezeichnet wird, eine mehrfach größere Querschnittsfläche als der Messkanalzweig aufweist. Eine genaue Feststellung der Flussmenge in dem Messkanalzweig ist dabei nur möglich, wenn in dem die Sensoranordnung aufweisenden Messkanalzweig eine laminare Strömung besteht. Turbulente Strömungseffekte in dem Umgehungskanal wirken sich negativ auf die laminare Strömung in dem den Messsensor aufweisenden Messkanalzweig aus. Zudem Bewirkt der Umschlag von einer laminaren zu einer turbulenten Strömung einen hysteresebehafteten sprunghaften Anstieg des Fluidflusses in dem Messkanal. Um auch im Umgehungskanal eine weitgehend laminare Strömung zu erreichen, ist es üblich, den Umgehungskanal in eine Anzahl von parallel zueinander verlaufenden Umgehungskanalzweigen aufzuteilen, die insbesondere untereinander gleich ausgebildet sind und vorzugsweise zumindest in der Querschnittsform der Querschnittsform des Messkanalzweigs entsprechen. Beispielhaft wird auf die Druckschriften EP 0 876 588 B1 und EP 1 503 186 B1 verwiesen.

Die EP 0 876 588 B1 offenbart einen Fluiddurchflussmesser, mit einem Gehäuse, mit einem inneren Hohlraum, einem Fluideinlass an einem Ende des Hohlraumes, einem Fluidauslass an dem anderen Ende des Hohlraumes, mit Durchflusserfassungs- und Anzeigemitteln, die mit dem Hohlraum durch eine Öffnung in einer ersten Seite des Gehäuses kommunizieren und mit einem Laminarströmungsmodul in dem Hohlraum, wobei das Laminarströmungsmodul eine erste Mehrzahl ebener Platten umfasst, die mehrere sich zwischen dem Einlass und dem Auslass des Hohlraums in dem Gehäuse erstreckende Laminarströmungskanäle für den Hauptkanal festlegen, von dem der Messkanalzweig seitlich abzweigt. Das Laminarströmungsmodul ist durch eine Öffnung auf einer der ersten Seite entgegengesetzten zweiten Seite des Gehäuses montierbar, wobei die erste Mehrzahl ebener Platten mehrere darauf parallel mit Abstand zueinander angeordnete Drähte aufweist, um die mehrere Laminarströmungskanäle festzulegen, und das Laminiarströmungsmodul ferner eine zweite Mehrzahl von Platten umfasst, die jeweils zwischen den ersten Platten angeordnet sind. Diese Platten bilden einen Plattenstapel, dessen Platten in gestapelter Anordnung miteinander fest verbunden sind.

Die EP 1 503 186 B1 lehrt eine thermische Durchsatzmessvorrichtung, die einen Sensorkanal, über den eine elektrische Sensoranordnung angeordnet ist, und einen Umgehungskanal hinsichtlich des Sensorkanals aufweist, wobei in einem den Gehäuseeinlass und den Gehäuseauslass verbindenden Durchflusskanal ein Kanalraum vorgesehen ist, der den Umgehungskanal und den Sensorkanal bildet. In den Kanalraum ist ein Laminat aufgenommen, das durch viele dünne Plättchen gebildet ist, die jeweils eine Öffnung besitzen. Das Laminat ist daran angepasst, ein Fluid in einem Fluidabschnitt, der in den Sensorkanal strömt, und in einen Fluidabschnitt zu teilen, der in den Umgehungskanal strömt. Das Laminat weist Maschenplättchen auf, die jeweils durch ein dünnes Plättchen gebildet sind und einen Maschenabschnitt an den beiden Enden des Plättchens haben, wobei die Maschenabschnitte mit dem Gehäuseeinlass bzw. dem Gehäuseauslass in Verbindung sind und die Maschenplättchen über ein Abstandsstück aneinander laminiert sind. Der Umgehungskanal ist durch ein Substrat ausgebildet, das mit dem dem Kanalraum aufweisenden Gehäuseteil in einem engen Kontakt ist, um so den Kanalraum mit dem darin aufgenommenen Laminat zu schließen, wobei der Sensorkanal durch eine Nut definiert ist, die sich zwischen dem Substrat und dem Laminat erstreckt.

Als nachteilig wird bei dem vorstehend genannten Stand der Technik angesehen, dass bei diesen Lösungen der Messkanalzweig separat ausgeführt und jeweils durch eine Nut in dem den Hohlraum bzw. Kanalraum abschließenden Gehäuseteil bzw. Substratteil gebildet ist. Der Messkanalzweig ist damit durch die Ausnehmung des verwendeten Gehäuseteils bzw. Substratteils festgelegt und kann nicht ohne weiteres in seiner Geometrie geändert werden. Dem gegenüber ist die Geometrie der Umgehungskanalzweige bei den bekannten Durchflussmengenmesseinheiten einfach variierbar, indem geometrisch unterschiedlich ausgebildete Plattenstapel bzw. Laminate verwendet werden.
Aus dem Stand der Technik sind auch Durchflussmengensteuereinheiten zur Steuerung der Durchflussmengen eines Fluids allgemein bekannt, die eine Durchflussmengenmesseinheit zur Feststellung der Durchflussmenge des Fluids und eine mit der Durchflussmengenmesseinheit in Reihe geschaltete elektrisch steuerbare, insbesondere regelbare Ventileinheit zur Einstellung der Durchflussmenge des Fluids aufweist.
Ausgehend von dem vorstehend genannten Stand der Technik liegt der Erfindung die Aufgabe zugrunde, eine Möglichkeit vorzuschlagen, mit der sowohl der Messkanalzweig wie auch die Umgehungskanalzweige einer Durchflussmengenmesseinheit einfach an die speziellen Eigenschaften unterschiedlicher Fluide anpasst werden können, ohne konstruktive Änderungen an dem den Hauptkanal abschließenden Substrat bzw. den Gehäuseteilen vorzunehmen.
Diese Aufgabe wird erfindungsgemäß durch eine Durchflussmengenmesseinheit mit den Merkmalen des unabhängigen Patentanspruchs 1 sowie durch eine Durchflussmengensteuereinheit mit den Merkmalen des nebengeordneten Patentanspruchs 15 gelöst. Weitere vorteilhafte Ausgestaltungen sind den rückbezogenen Patentansprüchen zu entnehmen.
Bei der eingangs beschriebenen Durchflussmengenmesseinheit zur Feststellung der Durchflussmenge eines Fluids, ist erfindungsgemäß vorgesehen, dass der Messkanalzweig von mindestens einer Einlegeplatte des Einlegeplattenstapels gebildet ist, die mindestens eine in Längsrichtung der Einlegeplatte verlaufende Plattenlängsausnehmung aufweist, wobei sich der Messkanalzweig parallel zu dem mindestens einen Umgehungskanalzweig erstreckt, und wobei der Messkanalzweig in der Kanalerweiterungskammer orthogonal von dem Verzweigungskanal abzweigt und anschließend orthogonal in den Mündungskanal einmündet. Dabei erstrecken sich der Messkanalzweig und der mindestens eine Umgehungskanalzweig nebeneinander oder übereinander. Erfindungsgemäß sind der Messkanalzweig und der mindestens eine Umgehungskanalzweig Teil des Einlegeplattenstapels, der in der Kanalerweiterungskammer aufgenommen ist. Somit kann allein durch den Einbau bzw. durch den Austausch des Einlegeplattenstapels auf einfache Weise eine Durchflussmengenmesseinheit bereitgestellt werden, die an unterschiedliche Fluids angepasst ist. Dabei ist der Messkanalzweig von mindestens einer Einlegeplatte des Einlegeplattenstapels mit mindestens einer in Längsrichtung der Einlegeplatte verlaufenden Plattenlängsausnehmung gebildet, wobei sich der Messkanalzweig parallel zu dem mindestens einen Umgehungskanalzweig erstreckt und der Messkanalzweig in der Kanalerweiterungskammer orthogonal von dem Verzweigungskanal abzweigt und anschließend orthogonal in den Mündungskanal einmündet, und wobei sich der Messkanalzweig und der mindestens eine Umgehungskanalzweig sich nebeneinander oder übereinander erstrecken. Vorzugsweise ist dabei das Substrat mit der Sensoranordnung ein Halbleiterchip. Bei der erfindungsgemäßen Durchflussmengenmesseinheit können die elektrischen Verbindungsleitungen zu der von dem Substrat getragenen Sensoranordnung an jeder geeigneten Stelle des Gehäuses und/oder zwischen mindestens zwei Gehäuseteilen an einer geeigneten Stelle des Gehäuses nach außen abdichtend geführt sein. Die Verbindungsleitungen können dabei als isolierte Litzen bzw. Drähte oder als isolierte Leiterbahnen auf oder in einer flexiblen Kunststofffolie und/oder einer flexiblen bzw. starren Leiterplatte ausgeführt sein. Auch können die Verbindungsleitungen eine als Steckverbindung ausgebildete Schnittstelle nach außen aufweisen, wobei die an den Verbindungsleitungen befestigte Steckverbindung gegenüber dem Gehäuse, insbesondere der Kanalerweiterungskammer dicht, beispielsweise an einem der Gehäuseteile oder einer Leiterplatte angeordnet ist. Zudem können die Plattendurchbrüche an den Plattenendbereichen der Einlegeplatten des Einlegeplattenstapels in sich geschlossen oder nach außen zumindest an einer Stelle offen ausgebildet sein. Die jeweiligen Einlegeplatten des Einlegeplattenstapels können eine oder mehrere Plattenlängsausnehmungen aufweisen, wobei mehrere Plattenlängsausnehmungen für die Bildung einer Anzahl von Umgehungskanalzweigen vorteilhaft sind. Prinzipiell sind auch Einlegeplatten mit einer unterschiedlichen Anzahl von Plattenlängsausnehmungen miteinander für den Einlegeplattenstapel kombinierbar.

Sofern der Einlegeplattenstapel mindestens zwei Plattenlängsausnehmungen aufweisende Einlegeplatten zur Bildung des Messkanalzweigs und von mehreren Umgehungskanalzweigen umfasst, so verzweigen der Messkanalzweig und die Umgehungskanalzweige vorzugsweise aus dem Verzweigungskanal mit Abstand zueinander und münden vorzugsweise in den Mündungskanal ebenfalls mit Abstand zueinander ineinander ein, wobei zumindest die an dem Verzweigungskanal angeordneten Eintrittsbereiche des Messkanalzweigs und der mindestens zwei Umgehungskanalzweige vorteilhafterweise gleich ausgebildet sind. Es hat sich jedoch als günstig erwiesen, auch die Austrittsbereiche des Messkanalzweigs und der mindestens zwei Umgehungskanäle formgleich auszubilden. Damit wird erreicht, dass die laminare Strömung in dem Messkanalzweig und den Umgehungskanalzweigen zum einen identisch und zum anderen optimal ist. Durch diese Maßnahmen werden störende Einflüsse auf die laminaren Strömung in dem Messkanalzweig, insbesondere im Bereich der auf dem Substrat angeordneten elektrischen Sensoranordnung vermieden. Somit werden die Eintrittsbereiche des Messkanalzweigs und der Umgehungskanalzweige, die vom Verzweigungskanal orthogonal abzweigen und sich parallel zueinander erstrecken, in identischer Weise angeströmt. Gleiches gilt für die Austrittsbereiche des Messkanalzweigs und der Umgehungskanalzweige, die in den Mündungskanal einmünden.

Bei einer bevorzugten Ausführungsform der Erfindung weisen die Einlegeplatten Plattenendbereiche mit jeweils einem Plattendurchbruch auf, wobei die Plattendurchbrüche in dem Einlegeplattenstapel den Verzweigungskanal und den Mündungskanal bilden, und wobei der mindestens eine Umgehungskanalzweig und der Messkanalzweig mit Abstand zueinander längs des Verzweigungskanals verzweigen und längs des Mündungskanals einmünden. Durch eine fluiddichte Anordnung der Einlegeplatten zueinander ist der Strömungsweg des Fluids festgelegt. Die Anordnung und Gestaltung der Einlegeplatten stellt vorzugsweise sicher, dass Hohlräume und Spaltmaße im Bereich um den Einlegeplattenstapel und zwischen den Gehäuseteilen nicht als parasitäre Kanalzweige, die sich aufgrund der Konstruktion oder von Fertigungstoleranzen ergeben, fungieren können, indem die Plattenausnehmungen und -durchbrüche für den Mündungskanal, den Verzweigungskanal, die Umgehungskanalzweige sowie den Messkanalzweig von Plattenbereichen umgeben, insbesondere umschlossen sind, in denen die Platten sich aufeinander abstützen.

Bei einer vorteilhaften Ausführungsform der erfindungsgemäßen Durchflussmengenmesseinheit weist der Einlegeplattenstapel mindestens zwei unterschiedliche Arten von Einlegeplatten aufweist, die jeweils in abwechselnder Folge angeordnet sind, wobei eine Art als ebene Einlegeplatte ohne Plattenlängsausnehmungen und die andere Art als ebene Einlegeplatte mit Plattenlängsausnehmungen ausgebildet ist, die als Plattenlängsdurchbrüche ausgeführt sind.

Bei einer anderen vorteilhaften Ausführungsform der erfindungsgemäßen Durchflussmengenmesseinheit weist der Einlegeplattenstapel nur eine Art von Einlegeplatten aufweist, die als profilierte Einlegeplatte mit Plattenlängsausnehmungen ausgebildet sind, die als Plattenlängsnuten ausgeführt sind.

Bei einer bevorzugten Ausführungsform der Erfindung weist zumindest die dem Substrat mit der Sensoranordnung nächstliegende, vorzugsweise oberste Einlegeplatte mindestens zwei nutartige parallel zueinander verlaufende Plattenlängsausnehmungen auf, von denen eine den Messkanalzweig und mindestens eine andere einen der Umgehungskanalzweige bildet. Es ist klar, dass bei einer derartigen Ausführungsform das Substrat mit der elektrischen Sensoranordnung außermittig zu der Kanalerweiterungskammer angeordnet ist, so dass diese nur fluchtend zu dem Messkanalzweig liegt. Dabei ragt die von dem Substrat getragene Sensoranordnung nicht oder nur geringfügig in den Messkanalzweig, um dort die laminare Strömung nicht zu stören. Vorzugweise ist die Sensoranordnung fluchtend mit einer Wand des Messkanalzweigs angeordnet oder minimal gegenüber der Wand des Messkanals zurückversetzt. Die mindestens eine Plattenlängsausnehmung von mindestens zwei Einlegeplatten, die den Messkanalzweig und/oder mindestens einen Umgehungskanalzweig bestimmen, können prinzipiell eine einheitliche oder eine unterschiedliche Querschnittsform aufweisen Bei einer begünstigten Ausführungsform der Erfindung weisen die Plattenlängsausnehmungen der Einlegeplatte, die den Messkanalzweig und mindestens einen Umgehungskanalzweig bilden, und/oder die Plattenlängsausnehmungen der mindestens einen weiteren Einlegeplatte, die nur Umgehungskanalzweige bilden, eine einheitliche Querschnittsform auf. Je mehr Umgehungskanalzweige in einer Einlegeplatte angeordnet sind, umso besser ist die laminare Strömung in den Umgehungskanalzweigen sowie in dem Messkanalzweig, respektive umso größer ist die Gesamtflusskapazität der Durchflussmengenmesseinheit.

Bei einer besonders bevorzugten Ausführungsform der erfindungsgemäßen Durchflussmengenmesseinheit sind alle Einlegeplatten des Einlegeplattenstapels zumindest in ihrer Kontur gleich ausgebildet sind, wobei der Messkanalzweig und der mindestens eine Umgehungskanalzweig eine gleiche Querschnittsform und eine gleiche Länge aufweisen. Dies wirkt sich insbesondere positiv auf die Herstellungskosten für den Einlegeplattenstapel aus und erleichtert zudem dessen Montage. Bei einer vorteilhaften Variante dieser Ausführungsform sind mehrere Einlegeplatten vorgesehen, die nur mindestens einen Umgehungskanal aufweisen, wobei diese Einlegeplatten des Einlegeplattenstapels zueinander gleich ausgebildet und die Einlegeplatte des Einlegeplattenstapels, die mindestens den Messkanalzweig aufweist, gegenüber den anderen darunter und/oder darüber angeordneten Einlegeplatten abweichend ausgeführt. Damit kann der in der obersten Einlegeplatte ausgebildete Messkanalzweig optimal gestaltet werden, unabhängig von der durch die Umgehungskanalzweige fließenden Durchflussmenge.

Bei einer favorisierten Ausführungsform der Erfindung stützt sich der Einlegeplattenstapel mit einer Stirnseite, die von dem die Sensoranordnung aufweisenden Substrat abgewandt ist, auf einer Stapeltrageplatte ab, die auf einem Boden der Kanalerweiterungskammer angeordnet ist. Die Stapeltrageplatte ist vorzugsweise eben und zumindest in der Kontur gleich ausgebildet wie die Einlegeplatten des Einlegeplattenstapels. Sie erstreckt sich dabei bis in Verzweigungskanal und den Mündungskanal der Kanalerweiterungskammer oberhalb einer für das Fluid vorgesehene Eintrittsöffnung in die Kanalerweiterungskammer und oberhalb einer für das Fluid vorgesehene Austrittsöffnung aus der Kanalerweiterungskammer.

Bei einer vorteilhaften Ausführungsform der Erfindung weisen die Einlegeplatten des Einlegeplattenstapels zumindest ein an die jeweilige Einlegeplatte angeformtes Turbulenzfilter auf, das jeweils vor dem Messkanalzweig und/oder den Umgehungskanalzweigen der Einlegeplatte in dem Plattendurchbruch an oder nahe den Eintrittsbereichen der Plattenlängsausnehmungen angeordnet ist und sich bis in den Verzweigungskanal erstreckt, wobei das Turbulenzfilter als mindestens eine Plattenquerlamelle oder als ein Plattengitter ausgebildet ist. Das Turbulenzfilter verbessert die gleichmäßige Verteilung des Fluids über den Messkanalzweig und den Umgehungskanal, insbesondere dessen Umgehungskanalzweige. Damit werden mögliche im Verzweigungskanal vorkommende Turbulenzen weitgehend ausgeglichen. Vorzugsweise ist die mindestens eine Plattenquerlamelle oder das Plattengitter höhenversetzt zu den Plattenlängsausnehmungen der jeweiligen Einlegeplatte angeordnet. Der Höhenversatz beträgt typisch etwa die Hälfte der Stärke der Einlegeplatten. Dies steigert die Effizienz bei der Reduzierung der Turbulenzen.

Bei einer besonders vorteilhaften Ausführungsform sind die den Messkanalzweig und/oder den mindestens einen Umgehungskanalzweig aufweisenden Einlegeplatten des Einlegeplattenstapels durch das mindestens eine andere Gehäuseteil bei verbundenen Gehäuseteilen zumindest in einem die Plattenlängsausnehmungen und/oder die Plattendurchbrüche umschließenden Bereich gepresst, wobei zwischen den miteinander verbundenen Gehäuseteilen außerhalb der Kanalerweiterungskammer ein Gehäusespalt ausgebildet ist, und die Einlegeplatten definiert aufeinander liegen, und wobei der Einlegeplattenstapel unter Bildung eines bestimmten Gehäusespaltmaßes zwischen den mindestens zwei Gehäuseteilen geklemmt ist.

Bei einer vorteilhaften Ausführungsform der Erfindung steht bei dem die Kanalerweiterungskammer aufweisenden Gehäuseteil der Einlegeplattenstapel über die Kanalerweiterungskammer vor und/oder das andere Gehäuseteil, das die Einlegeplatten des Einlegeplattenstapels in der Kanalerweiterungskammer aneinander presst, weist zumindest mittig eine Erhebung auf, die zumindest zwischen den mindestens zwei Gehäuseteilen ein bestimmtes Gehäusespaltmaß des Gehäusespaltes definiert. Damit ist sichergestellt, dass in jedem Fall ein ausreichender Druck auf die Einlegeplatten des Einlegeplattenstapels ausgeübt wird, um diese dichtend aneinander zu pressen und so einen definierten Strömungsweg und eine definierte Strömung in dem Messkanalzweig und dem mindestens einen Umgehungskanalzweig herbeiführen.

Bei einer günstigen Ausführungsform der erfindungsgemäßen Durchflussmengenmesseinheit ist in dem Gehäusespalt mindestens ein abdichtendes formbares Dichtungselement vorgesehen, vorzugsweise ein Dichtring, eine Flachdichtung oder ein Klebstoff. Dieses dichtet den Gehäusespalt um die Kanalerweiterungskammer herum zumindest nach außen hin ab.

Bei einer bevorzugten Ausführungsform der Erfindung ist der Durchflusskanal nur in einem der Gehäuseteile angeordnet, und damit die Kanalerweiterungskammer nur in dem den Durchflusskanal aufweisenden Gehäuseteil vorgesehen, wobei die elektrischen Verbindungsleitungen zu dem Substrat mit der elektrischen Sensoranordnung zwischen einem der Gehäuseteile und dem zur Abdichtung der Kanalerweiterungskammer vorgesehenen formbaren Dichtungselements aus dem Gehäuse herausgeführt sind. Dies bedeutet, dass der Einlegeplattenstapel nur in einem der Gehäuseteile aufgenommen ist und nicht über dieses Gehäuseteil vorsteht. Mittels des mindestens einen zweiten Gehäuseteils kann die Kanalerweiterungskammer durch Verbinden der beiden Gehäuseteile, beispielsweise über eine Schraub-, Niet-, Rast- oder Klemmverbindung dichtend verschlossen werden. Das andere Gehäuseteil kann dabei besonders einfach als ebene Platte ausgeführt sein.

Bei einer besonders bevorzugten Ausführungsform ist zwischen dem die Kanalerweiterungskammer aufweisenden Gehäuseteil und dem mindestens einen anderen Gehäuseteil eine Leiterplatte angeordnet, die zumindest das Substrat mit der Sensoranordnung trägt und die Verbindungsleitungen aufweist, wobei das verformbare Dichtungselement zwischen dem die Kanalerweiterungskammer aufweisenden Gehäuseteil und der Leiterplatte angeordnet ist. Dabei erstreckt sich die Leiterplatte in dem Gehäusespalt zwischen den Gehäuseteilen, wobei das andere Gehäuseteil die Leiterplatte gegen das die Kanalerweiterungskammer aufweisende Gehäuseteil presst. Dabei übergreift die Leiterplatte die Kanalerweiterungskammer und zumindest noch das abdichtende Dichtungselement. Auf diese Weise schließt die Leiterplatte die Kanalerweiterungskammer des einen Gehäuseteils nach außen dichtend ab, wobei sich die Leiterplatte an dem anderen Gehäuseteil abstützt. Zudem wird dadurch der Messkanalzweig und der mindestens eine Umgehungskanalzweig zueinander fluiddicht seitlich verschlossen. Dabei presst insbesondere das andere Gehäuseteil die Leiterplatte gegen den Einlegeplattenstapel und diesen direkt oder indirekt gegen das Gehäuseteil mit der Kanalerweiterungskammer. Wie bereits ausgeführt wird unter fluiddicht im Zusammenhang mit den Einlegeplatten verstanden, dass sichergestellt ist, dass sich kein parasitärer Kanalzweig ausbildet.

Weiterhin sind bei einer weiteren bevorzugten Ausführungsform die elektrischen Verbindungsleitungen zu dem Substrat mit der Sensoranordnung zumindest im Bereich des mindestens einen den Gehäusespalt abdichtenden formbaren Dichtungselementes in der Leiterplatte geführt. Dies ermöglicht insbesondere eine einfache dauerhaft druckdichte Verbindung der Leiterplatte ohne zusätzliche abdichtende Maßnahmen mit dem die Kanalerweiterungskammer aufweisenden Gehäuseteil. Vorzugsweise weist die Leiterplatte bei einer Ausführungsform der Erfindung im Bereich der Kanalerweiterungskammer noch eine zentrale Verdickung auf, über die die Leiterplatte durch das andere Gehäuseteil vorgespannt die Kanalerweiterungskammer verschließt. Die Verdickung kann als Auflage auf der Rückseite der Leiterplatte oder als Einlage in der Leiterplatte realisiert sein, beispielsweise als vorgesehene Metallisierung. Durch die Vorspannung der Leiterplatte durch das zweite Gehäuseteil kann dieses den Druck des fließenden zu messenden Fluids problemlos aufnehmen, ohne dass sie sich verbiegt, so dass eine unvorteilhafte Vergrößerung des Querschnittes des Messkanalzweigs ausgeschlossen ist. Somit kann unabhängig vom Druck des zu messenden Fluids eine exakte Messung der Durchflussmenge der Durchflussmengenmesseinheit sichergestellt werden.

Vorzugsweise weist dabei das Gehäuseteil, das die Leiterplatte gegen das die Kanalerweiterungskammer mit dem darin aufgenommenen Einlegeplattenstapel aufweisenden Gehäuseteil drückt, und/oder die Leiterplatte, die sich an diesem Gehäuseteil abstützt, zumindest im Bereich des Dichtungselementes ein definiertes Gehäusespaltmaß zu dem die Kanalerweiterungskammer aufweisenden Gehäuseteil auf. Dies gewährleistet, dass die Einlegeplatten des Einlegeplattenstapels gegeneinander und gegebenenfalls. gegen die Stapeltrageplatte gepresst sind.

Bei einer weiteren bevorzugten Ausführungsform der Erfindung ist die Leiterplatte zwischen zwei Einlegeplatten des Einlegeplattenstapels angeordnet und unterteilt den Einlegeplattenstapel sowie die Kanalerweiterungskammer, wobei die Leiterplatte Durchleitöffnungen für das Fluid im Bereich des Verzweigungskanals bzw. des Mündungskanals aufweist. Demzufolge weisen beide an die Leiterplatte angrenzenden Gehäuseteile jeweils einen Kanalerweiterungskammerabschnitt auf. Dabei können beidseitig der Leiterplatte jeweils eine beliebige Anzahl von Einlegeplatten angeordnet sein. Die Tiefe der beiden Kanalerweiterungskammerabschnitte in den den Einlegeplattenstapel aufnehmenden Gehäuseteilen hängt somit von der jeweiligen Einlegeplattenzahl sowie der Dicke ab.

Vorzugsweise sind die Einlegeplatten des Einlegeplattenstapels und idealerweise auch die Stapeltrageplatte gestanzte, geprägte und/oder geätzte Metallstreifen, vorzugsweise Blechstreifen. Auf diese Weise können die Einlegeplatten auf einfache und kostengünstige Weise mit den unterschiedlichsten Plattenlängsausnehmungen, Plattendurchbrüchen, und Turbulenzfiltern ausgeführt werden. Natürlich können auch für die Herstellung der Einlegeplatten Metallstreifen größerer Stärke verwendet werden, die durch Räumen, Bohren, Fräsen oder andere mechanische Bearbeitungsschritte entsprechend geformt sind.

Die erfindungsgemäße Durchflussmengensteuereinheit zur Steuerung der Durchflussmenge eines Fluids weist eine Durchflussmengenmesseinheit zur Feststellung der Durchflussmenge des Fluids und mindestens eine mit der Durchflussmengenmesseinheit in Reihe geschaltete elektrisch steuerbare Ventileinheit zur Einstellung der Durchflussmenge des Fluids auf. Die Durchflussmengenmesseinheit weist dabei einen sich in einen Messkanalzweig und mindestens einen Umgehungskanalzweig verzweigenden Durchflusskanal auf, wobei der Messkanalzweig eine auf einem Substrat angeordnete elektrische Sensoranordnung aufweist, die ebenso wie die Ventileinheit mit einer elektronischen Steuerung elektrisch verbunden ist. Erfindungsgemäß weist die Durchflussmengensteuereinheit eine erfindungsgemäße Durchflussmengenmesseinheit wie vorstehend beschrieben auf. Dabei kann die Ventileinheit als Ventilschalteinheit oder als Ventilregeleinheit ausgebildet sein. Dies bedeutet, dass die Ventileinheit dazu ausgelegt ist, entweder den Fluss des Fluids durch den Durchflusskanal entweder nur ein- und auszuschalten oder diesen in seiner Menge zu steuern bzw. zu regeln.

Nachfolgend wird die Erfindung anhand zweier in der Zeichnung dargestellten Ausführungsbeispiele näher erläutert. Weitere Merkmale der Erfindung ergeben sich aus der folgenden Beschreibung der Ausführungsbeispiele der Erfindung in Verbindung mit den beigefügten Zeichnungen. Es zeigen:
- Figur 1: eine erfindungsgemäße Durchflussmengenmesseinheit in perspektivischer Darstellung, mit einer zwischen zwei Gehäuseteilen angeordneten Leiterplatte und mit einem in einer Kanalerweiterungskammer eines Gehäuseteils aufgenommenen Einlegeplattenstapel, der sich stirnseitig an der Leiterplatte abstützt;
- Figur 2: eine erfindungsgemäße Durchflussmengensteuereinheit mit einer Variante der Durchflussmengenmesseinheit nach Figur 1, in perspektivischer Darstellung;
- Figur 3: die Durchflussmengenmesseinheit aus Figur 1, dargestellt in einer Explosionszeichnung;
- Figur 4: das größere Gehäuseteil der Durchflussmengenmesseinheit aus Figur 1 (Fig. 4a) und aus Figur 1' (Fig. 4b), in einer Aufsichtsdarstellung der Innenseite;
- Figur 5: das größere Gehäuseteil der Durchflussmengenmesseinheit aus Figur 1 (Fig. 5a) und der Durchflussmengenmesseinheit der Durchflussmengensteuereinheit aus Figur 2 (Fig. 5b), in einer Längsschnittdarstellung;
- Figur 6: die einzelnen Einlegeplatten des Einlegeplattenstapels aus Figur 3, getrennt voneinander (Figur 6a bis 6c);
- Figur 7: der Einlegeplattenstapel aus Figur 3;
- Figur 8: die Durchflussmengenmesseinheit aus Figur 1, in einer Längsschnittdarstellung;
- Figur 9: die Durchflussmengenmesseinheit aus Figur 1, in einer Querschnittsdarstellung;
- Figur 10: eine Variante der Durchflussmengenmesseinheit gemäß Figur 1, in einer Querschnittsdarstellung, mit einer im Gehäusebereich zentral eine Verdickung aufweisenden Leiterplatte;
- Figur 11: eine Variante der erfindungsgemäßen Durchflussmengenmesseinheit gemäß Figur 1, wobei sich die Leiterplatte zwischen zwei Einlegeplatten des Einlegeplattenstapels erstreckt, in einer Querschnittsdarstellung;
- Figur 12: die Leiterplatte der Durchflussmengenmesseinheit aus Figur 1, mit Blick auf das Substrat mit der Sensoranordnung und
- Figur 13: drei unterschiedliche Arten von Einlegeplatten, die, entsprechend aufeinander gelegt, eine voll funktionsfähige Einlegeplatte wie in den Figuren 6a und 6b gezeigt mit Plattenlängsausnehmung bilden, wobei Figur 13a und 13c jeweils eine Einlegeplatte ohne und Figur 13b eine Einlegeplatte mit Plattenlängsausnehmungen zeigt.

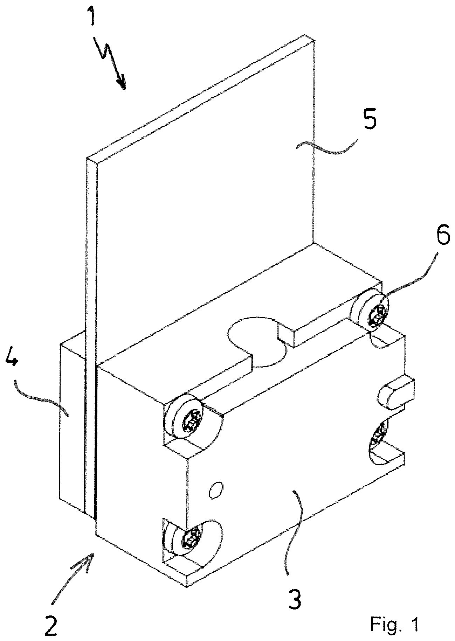

Die Figur 1 zeigt in perspektivischer Darstellung eine erfindungsgemäße Durchflussmengenmesseinheit 1, mit einem Gehäuse 2, das aus zwei Gehäuseteilen 3,4 besteht, zwischen denen eine Leiterplatte 5 angeordnet ist. Die Leiterplatte 5 ist zwischen den Gehäuseteilen 3, 4 durch vier Spannschrauben 6 gehalten, indem das größere Gehäuseteil 3 mit dem kleineren Gehäuseteil 4 verschraubt ist. Die Leiterplatte 5 ist größer als die Gehäuseteile 3, 4 ausgebildet und steht einseitig über das Gehäuse 2 vor.

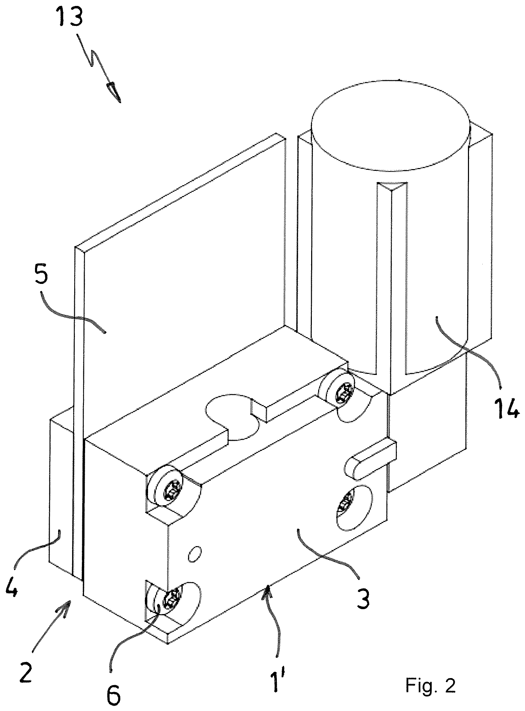

Die Figur 2 zeigt eine erfindungsgemäße Durchflussmengensteuereinheit 13, die eine ähnlich der vorstehend beschriebenen Durchflussmengenmesseinheit 1 ausgebildete Durchflussmengenmesseinheit 1' sowie eine Ventileinheit 14 umfasst. Die Ventileinheit 14 ist in Reihe mit der Durchflussmengenmesseinheit 1' geschaltet. Es handelt sich dabei vorzugsweise um eine elektrisch steuerbare Ventileinheit 14, mit der die Durchflussmenge des Fluids gesteuert und geregelt werden kann. Dazu ist die Ventileinheit 14 mit einer in der Figur 2 nicht gezeigten elektronischen Steuerung elektrisch verbunden, an die wiederum die Sensoranordnung des Substrats 11 direkt oder indirekt angeschlossen ist.

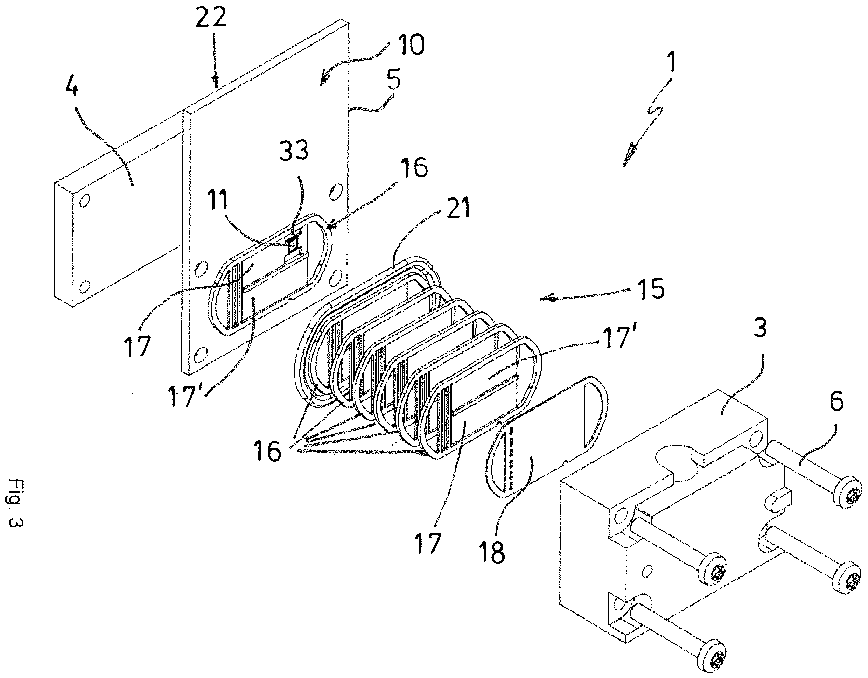

Die Figur 3 zeigt die Durchflussmengenmesseinrichtung aus Figur 1 und 2 in einer Explosionszeichnung. In dieser Darstellung sind alle in dem Gehäuseteil 3 aufgenommenen Komponenten der Durchflussmengenmesseinheit 1, 1' sichtbar. Diese Komponenten umfassen einen Einlegeplattenstapel 15, der in dem dargestellten Ausführungsbeispiel aus sieben im Wesentlichen identisch ausgebildeten Einlegeplatten 16, 16' zusammengesetzt ist, die jeweils zwei nutartige Plattenlängsausnehmungen 17, 17' aufweisen. Die oberste Einlegeplatte 16' unterscheidet sich von den sechs darunter befindlichen Einlegeplatten 16 lediglich dadurch, das in einer der Plattenlängsausnehmungen 17, 17', in diesem Fall in der Plattenlängsausnehmungen 17, ein Plattenfenster 33 vorhanden ist.

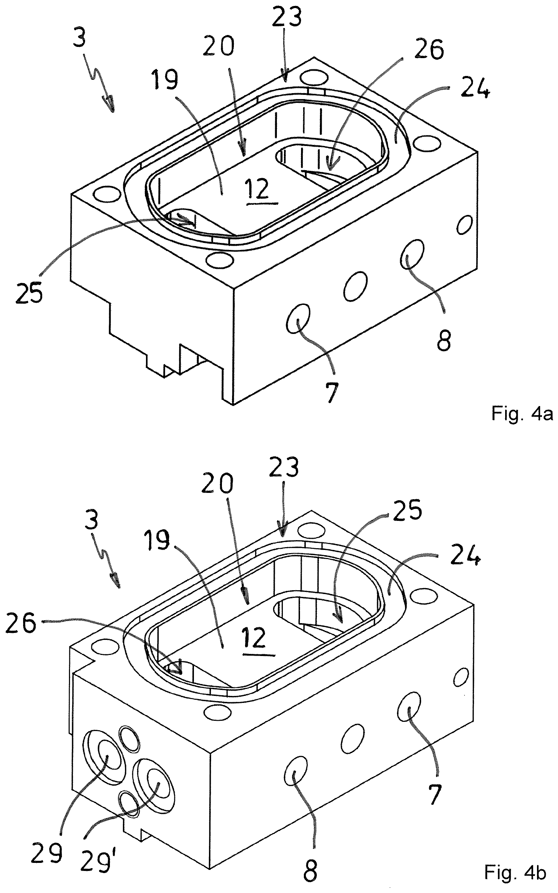

Die Einlegeplatten 16, 16' sind derart ausgerichtet, dass die Plattenlängsausnehmungen 17, 17' jeweils in Richtung des größeren Gehäuseteils 3 weisen, d.h. dorthin offen sind. Die jeweiligen Plattenlängsausnehmungen 17, 17' einer Einlegeplatte 16, 16' werden jeweils durch die nächstliegend angeordnete Einlegeplatte 16, 16' verschlossen, so dass sie in Umfangsrichtung geschlossene Fließkanäle bilden. Zwischen dem Gehäuseteil 3 und dem Einlegeplattenstapel 15 ist eine Stapeltrageplatte 18 vorgesehen, die im montierten Zustand innen an einem in der Figur 4 sichtbaren Boden 19 des Gehäuses 3 in Anlage ist und auf der sich der Einlegeplattenstapel 15 mit der von dem Substrat 11 abgewandten Stirnseite abstützt. Diese Stapeltrageplatte 18, die eben ausgebildet ist, verschließt dabei die Plattenlängsausnehmungen 17, 17' der untersten Einlegeplatte 16 des Einlegeplattenstapels 15. Der Einlegeplattenstapel 15 mit der darunter angeordneten Stapeltrageplatte 18 ist zwischen der Leiterplatte 5 und dem Boden 19 des Gehäuseteils 3 angeordnet und werden beim Verschrauben der beiden Gehäuseteile 3, 4 miteinander aneinander gepresst. Die Leiterplatte 5 trägt auf der dem größeren Gehäuseteil 3 zugewandten ersten Flachseite 10 ein eine Sensoranordnung aufweisendes Substrat 11. Das Substrat 11 ist von einem Halbleiterchip gebildet. Die Einlegeplatten 16 und 16' sowie die Stapeltrageplatte 18 sind in den Zeichnungen 6a bis 6c vergrößert einzeln dargestellt und werden nachfolgend nochmals näher beschrieben. Zwischen dem Gehäuseteil 3 und der Leiterplatte 5 ist ein Dichtungselement 21 in Form eines Dichtrings angeordnet, die die Kanalerweiterungskammer 12 gegenüber der Leiterplatte 5 abdichtet. Das Dichtungselement 21 umschließt die Einlegeplatte 16' sowie das Substrat 11 mit der Sensoranordnung. Sie wird beim Verschrauben des größeren Gehäuseteils 3 mit dem anderen kleineren Gehäuseteil 4 gegen die Leiterplatte 5 gepresst und verhindert zuverlässig ein Austreten von Fluid an dieser Stelle. Das Gehäuseteil 4 ist als ebene Platte ausgeführt, an der sich die Leiterplatte 5 mit ihrer zweiten Flachseite 22 abstützt.

Die Figur 4a zeigt das große Gehäuseteil 3 aus Figur 1 mit Blick auf die Innenseite des Gehäuses 2, d.h. auf diejenige Seite, die der Leiterplatte 5 zugewandt ist. Dieses Gehäuseteil 3 weist einen Gehäuseeinlass 7 und einen Gehäuseauslass 8 auf, zwischen denen sich ein in der Figur 4 nur teilweise sichtbarer Durchflusskanal 9 für das zu messende Fluid erstreckt. Der Gehäuseeinlass 7 und der Gehäuseauslass 8 sind seitlich an dem Gehäuseteil 3 angeordnet, das eine Kanalerweiterungskammer 12 aufweist, die sich zentral und symmetrisch ausgebildet als Gehäuseausschnitt 20 in dem Gehäuseteil 3 erstreckt. Die Gehäuseseite 23 des Gehäuseteils 3, zu der hin die Kanalerweiterungskammer 12 offen ist, weist eine die Kanalerweiterungskammer 12 außen umgreifende Aufnahmenut 24 für das Dichtungselement 21 auf. In dem Boden 19 der Kanalerweiterungskammer 12 ist eine Eintrittsöffnung 25 und eine Austrittsöffnung 26 für das Fluid vorgesehen, von denen aus sich der Durchflusskanal 9 in dieser Figur nicht sichtbar weiter bis hin zu dem Gehäuseeinlass 7 bzw. zu dem Gehäuseauslass 8 erstreckt.

Die Figur 4b zeigt das große Gehäuseteil 3 aus Figur 2 mit Blick auf die Innenseite des Gehäuses 2, d.h. auf diejenige Seite, die der Leiterplatte 5 zugewandt ist. Dieses Gehäuseteil 3 weist einen Gehäuseeinlass 7 und einen Gehäuseauslass 8 auf, die längsseitlich an dem Gehäuseteil 3 angeordnet sind, das die Kanalerweiterungskammer 12 aufweist. Zusätzlich weist das Gehäuseteil 3 stirnseitig noch zwei nebeneinander angeordnete Fluiddurchtrittsöffnungen 29, 29' auf, über die in der Figur 2 gezeigte Ventileinheit 14 miteinander fluidtechnisch verbindbar sind.

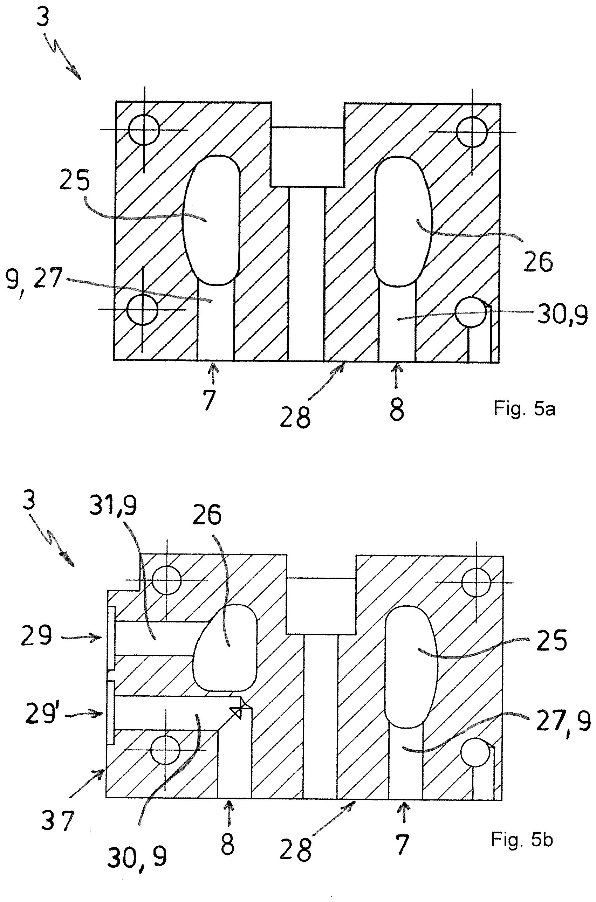

Die Figuren 5a und 5b zeigen zwei verschiedenen Varianten des größeren Gehäuseteils 3 jeweils in einer Längsschnittdarstellung in einer Ebene unterhalb des Bodens 19 der Kanalerweiterungskammer 12 des Gehäuses 3. Der jeweilige Schnittebene ist durch die von den Mittelachsen der Gehäuseeinlässe 7 und der Gehäuseauslässe 8 aufgespannten Ebene bestimmt. Die in der Figur 5a abgebildete ersten Variante ist für eine Durchflussmengenmesseinheit 1, an die keine Ventileinheit 14 angeflanscht wird, und die in der Figur 5b dargestellte zweite Variante für eine Durchflussmengensteuereinheit 13, die eine erfindungsgemäße Durchflussmengenmesseinheit 1' und eine Ventilsteuereinheit 14 umfasst. Diese Figuren zeigen den exakten Verlauf des Durchflusskanals 9 in dem Gehäuseteil 3.

Bei der ersten Variante gemäß der Figur 5a führt von dem an einer Längsseitenfläche 28 des Gehäuseteils 3 angeordneten Gehäuseeinlass 7 ein vorderer Teilabschnitt 27 des Durchflusskanals 9 bis hin zu der Eintrittsöffnung 25 der Kanalerweiterungskammer 12. Von der Austrittsöffnung 26 der Kanalerweiterungskammer 12 erstreckt sich ein hinterer Teilabschnitt 30 des Durchflusskanals 9 bis hin zu dem Gehäuseauslass 8. Die Teilabschnitte 27, 30 bilden zusammen mit der Kanalerweiterungskammer 12 den Durchflusskanal 9 durch das Gehäuse 2 der Durchflussmengenmesseinheit 1.

Bei der zweiten Variante nach der Figur 5b führt ebenfalls von dem an einer Längsseitenfläche 28 des Gehäuseteils 3 angeordneten Gehäuseeinlass 7 ein vorderer Teilabschnitt 27 des Durchflusskanals 9 bis hin zu der Eintrittsöffnung 25 der Kanalerweiterungskammer 12. Von der Austrittsöffnung 26 der Kanalerweiterungskammer 12 erstreckt sich ein mittlerer Teilabschnitt 31 des Durchflusskanals 9 bis hin zu einer an einer Stirnseitenfläche 37 des Gehäuseteils 3 angeordneten ersten Fluiddurchtrittsöffnung 29. Neben dieser Fluiddurchtrittsöffnung 29 ist eine zweite Fluiddurchtrittsöffnung 29' angeordnet, von der aus ein hinterer Teilabschnitt 3 des Durchflusskanals 9 zu dem Gehäuseauslass 8 führt. Die Teilabschnitte 27, 30, 31 bilden zusammen mit der Kanalerweiterungskammer 12 den Durchflusskanal 9 durch das Gehäuse 2 der Durchflussmengenmesseinheit 1'. Der mittlere Teilabschnitt 31 und der hintere Teilabschnitt 30 des Durchflusskanals 9 können an der Stirnseitenfläche 37 des Gehäuseteils 3 über die Fluiddurchtrittsöffnungen 29, 29' miteinander verbunden werden, indem an die Stirnseitenfläche 37 beispielsweise eine geeignet ausgebildete Ventileinheit 14, wie in der Figur 2 gezeigt, angeflanscht wird.

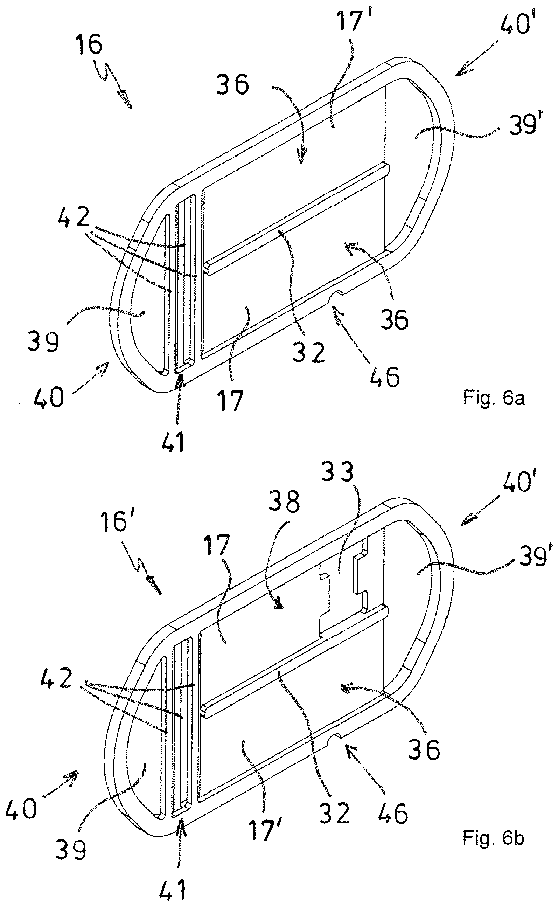

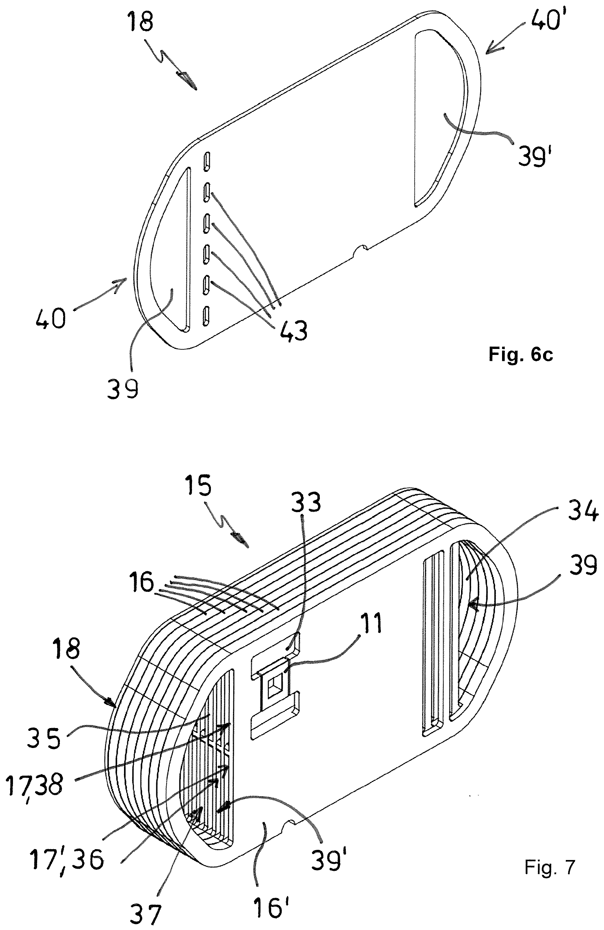

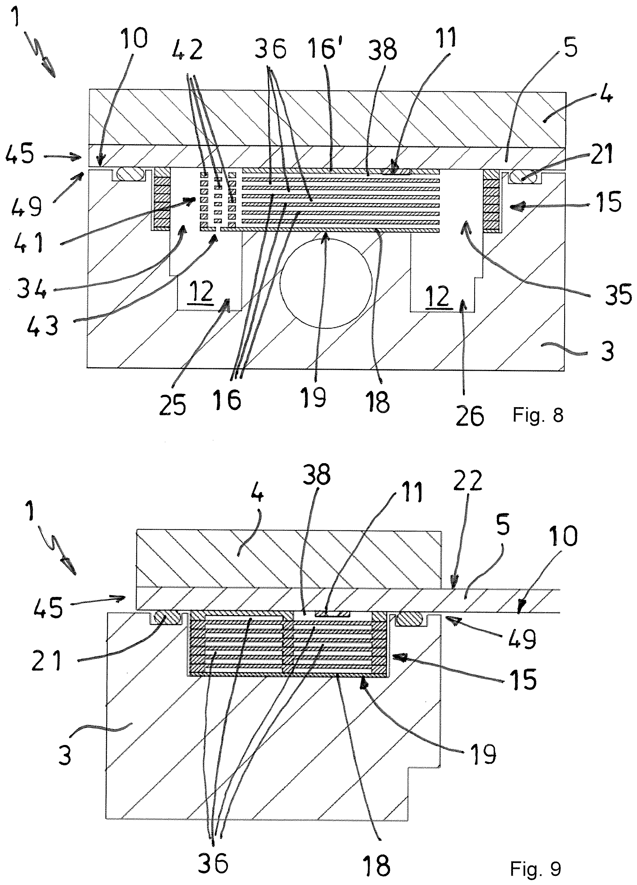

Die Figur 6a zeigt eine Einlegeplatte 16 des Einlegeplattenstapels 15 vereinzelt, die nur Strömungskanalzweige 36 bildet. Gut erkennbar sind jetzt die zwei Plattendurchbrüche 39, 39' an den Plattenendbereichen 40, 40' der Einlegeplatte 16, die bei übereinander gestapelten Einlegeplatten 16 den in der Figur 7 gezeigten Verzweigungskanal 34 bzw. Mündungskanal 35 formen. Weiterhin sind in dieser Ansicht die beiden Plattenlängsausnehmungen 17, 17' gut zu erkennen, die in diesem Ausführungsbeispiel die in einem Mittelbereich 46 der Einlegeplatten 16 ausgebildet und von einem mittig angeordneten Plattenlängssteg 32 voneinander getrennt sind. Die Plattenlängsausnehmungen 17, 17' sind als Plattenlängsnuten 17, 17' ausgebildet, und sind endseitig mit den Plattendurchbrüchen 39, 39' direkt verbunden. Der Plattendurchbruch 39 ist dem Verzweigungskanal 34 und der Plattendurchbruch 39' dem Mündungskanal 35 zugeordnet. In dem Plattendurchbruch 39 ist vor den Plattenlängsausnehmungen 17, 17' ein Turbulenzfilter 41 angeordnet, das von drei Plattenquerlamellen 42 gebildet ist. Die Plattenquerlamellen 42 sind in Längsrichtung der Einlegeplatte 16 voneinander beabstandet angeordnet und weisen, wie in der Figur 8 deutlich sichtbar, zueinander senkrecht zu der Einlegeplatte 16 einen Höhenabstand auf. Der andere Plattendurchbruch 39' der Einlegeplatte 16 weist in diesem Ausführungsbeispiel keinen derartigen Turbulenzfilter 41 auf. Er kann jedoch auch dort optional vorgesehen sein.

Die Figur 6b zeigt die obere Einlegeplatte 16' des Einlegeplattenstapels 15 der Durchflussmengenmesseinheit 1 gemäß der Figur 3, die in der Konturform entsprechend der Einlegeplatte 16 ausgebildet ist. Die Einlegeplatte 16' unterscheidet sich von der Einlegeplatte 16 lediglich durch das Plattenfenster 33, das für die Aufnahme des Substrats 11 mit der Sensoranordnung vorgesehen ist. Das Plattenfenster 33 ist als Durchbruch in die Plattenlängsausnehmung 17 eingebracht, die den Messkanalzweig 38 bildet. Die Plattenlängsausnehmung 17' bildet einen der Umgehungskanalzweige 36.

Die Figur 6c zeigt die Stapeltrageplatte 18, die in der Außenkontur den Einlegeplatten 16, 16' entspricht. Die Stapeltrageplatte 18 ist eben ausgebildet, d.h. sie weist keine Plattenlängsausnehmungen auf und besitzt entsprechend den Einlegeplatten 16, 16' Plattendurchbrüche 39, 39' an den Plattenendbereichen 40, 40'. An dem Plattendurchbruch 39 ist kein Turbulenzfilter 41 in Form von Plattenquerlamellen 42 vorgesehen. Anstelle dessen sind an dieser Stelle eine Anzahl von Durchströmungsfenstern 43 angeordnet, die unterhalb den Plattenquerlamellen 42 des Einlegeplattenstapels 15 angeordnet sind.

Die Figur 7 zeigt den Einlegeplattenstapel 15 der Durchflussmengenmesseinheit 1, der von der den Einlegeplatten 16, 16' gebildet und auf der Stapeltrageplatte 18 angeordnet ist. Die Stapeltrageplatte 18 und die Einlegeplatten 16, 16' liegen direkt lose aufeinander und werden erst im montierten Zustand des Gehäuses 2 von dem Gehäuseteil 3 gegen die Leiterplatte 5 und von Leiterplatte 5 gegeneinander gepresst. Die oberste Einlegeplatte 16' weist ein Plattenfenster 33 für die Aufnahme des Substrats 11 mit der Sensoranordnung auf. Die Plattendurchbrüche 39 des Einlegeplattenstapels 15 bilden den Verzweigungskanal 34 und die Plattendurchbrüche 39' des Einlegeplattenstapels 15 den Mündungskanal 35, die im montierten Zustand der Durchflussmengenmesseinheit 1 an die Eintrittsöffnung 25 bzw. die Austrittsöffnung 26 der Kanalerweiterungskammer 12 anschließen, wobei der Verzweigungskanal 34 der Eintrittsöffnung 25 und der Mündungskanal 35 der Austrittsöffnung 26 der Kanalerweiterungskammer 12 zugeordnet ist. Die Plattenlängsnuten 17, 17' der Einlegeplatten 16 bilden Umgehungskanalzweige 36 für den Messkanalzweig 38. Die nutartige Plattenlängsausnehmung 17 der oberen Einlegeplatte 16' bildet den Messkanalzweig 38, an dessen Wand das Substrat 11 mit der Sensoranordnung angeordnet ist, und die zweite nutartige Plattenlängsausnehmung 17' der oberen Einlegeplatte 16' bildet einen weiteren Umgehungskanalzweig 36 zu den Umgehungskanalzweigen 36 der Einlageplatten 16.

Es ist auch möglich, den Einlegeplattenstapel 15 derart anzuordnen, dass die Plattenlängsausnehmungen 17, 17' der Einlegeplatten 16, 16' nicht zu dem Boden 19 der Kanalerweiterungskammer 12 zeigen, sondern in umgekehrter Richtung, d.h. in Richtung der Leiterplatte 5. In diesem Fall kann auf das Plattenfenster 33 in der oberen Einlegeplatte 16' verzichtet werden, sodass all Einlegeplatten vollkommen identisch sind. Dann steht das Substrat 11 mit der Sensoranordnung jedoch in den von einer Plattenlängsausnehmung 17 der obersten Einlegeplatte 16' gebildete Messkanalzweig 38 vor. Dies ist jedoch für eine laminare Strömung in dem Messkanalzweig 38 ungünstig. Dieses Problem kann jedoch behoben werden, indem das Substrat 11 mit der Sensoranordnung in die Leiterplatte 5 vertieft montiert wird. In diesem Fall ist sogar bei geeigneter Gestaltung des Bodens 19 der Kanalerweiterungskammer 12 die Stapeltrageplatte 18 nicht unbedingt notwendig.

Die Figur 8 zeigt die Durchflussmengenmesseinheit 1 aus Figur 1 in einer Längsschnittdarstellung. Die Gehäuseteile 3, 4 sind mit dazwischenliegender Leiterplatte 5 übereinandergeschichtet angeordnet, wobei das die Kanalerweiterungskammer 12 aufweisende Gehäuseteil 3 mit dem anderen Gehäuseteil 4 nicht sichtbar verschraubt ist. Das Gehäuseteil 4 presst die Leiterplatte 5 gegen den aus den Einlegeplatten 16, 16' gebildeten Einlegeplattenstapel 15, und diesen gegen die Stapeltrageplatte 18 sowie das Gehäuseteil 3, wobei das Dichtungselement 21 die Kanalerweiterungskammer 12 nach außen hin abdichtet. Dabei ist zwischen den miteinander verbundenen Gehäuseteilen 3, 4 außerhalb der Kanalerweiterungskammer 12 ein Gehäusespalt 45 ausgebildet, wobei die Einlegeplatten 16, 16' in der Kanalerweiterungskammer 12 definiert aufeinander liegen und der Einlegeplattenstapel 15 unter Bildung des Gehäusespaltes 45 zwischen den zwei Gehäuseteilen 3, 4 geklemmt und das Dichtungselement 21 unter Bildung eines bestimmten Gehäusespaltmaßes 49 zwischen dem Gehäuseteil 3 und der Leiterplatte 5 gepresst ist. Der Boden 19 des Gehäuses 3 weist, wie der Figur 5a entnehmbar, eine Eintrittsöffnung 25 in und eine Austrittsöffnung 26 aus der Kanalerweiterungskammer 12 auf, wobei die Eintrittsöffnung 25 mit dem vorderen Teilabschnitt 27 und die Austrittsöffnung 26 mit dem hinteren Teilabschnitt 30 des Durchflusskanals 9 verbunden ist. Auf dem Boden 19 des Gehäuseteils 3 ist die Stapeltrageplatte 18 angeordnet, die einen Einlegeplattenstapel 15 aus sieben Einlegeplatten 16, 16' trägt. Der dargestellte Schnitt geht durch das Substrat 11 mit der Sensoranordnung und zeigt den Messkanalzweig 38 sowie die unterhalb des Messkanalzweigs angeordneten Umgehungskanalzweige 36. An den vorderen Teilabschnitt 27 des Durchflusskanals 9 schließt in Strömungsrichtung des zu messenden Fluids der Verzweigungskanal 34 an, an dem sich der Durchflusskanal 9 in den Messkanalzweig 38 und die Umgehungskanalzweige 36 verzweigt, wobei diese dann in den Mündungskanal 35 münden, an den der hintere Teilabschnitt 30 des Durchflusskanals 9 anschließt. Hier ist auch die Lage der Durchströmungsfenster 43 gegenüber den Plattenquerlamellen 42 deutlich sichtbar.

Zur Vervollständigung ist in der Figur 9 die Durchflussmengenmesseinheit 1 aus Figur 1 auch in einer Querschnittsdarstellung dargestellt. Der Schnitt geht ebenfalls durch das Substrat 11 mit der Sensoranordnung. In dieser Ansicht sind alle Umgehungskanalzweige 36 sowie der Messkanalzweig 38 deutlich zu sehen. Der im Gehäuseteil 3 angeordnete Durchflusskanal 9 weist eine zentral angeordnete Kanalerweiterungskammer 12 auf, in die das Substrat 11 mit der Sensoranordnung hineinragt. Es ist zu sehen, dass bei diesem Ausführungsbeispiel die Einlegeplatten 16, 16' des Einlegeplattenstapels 15 mit in Richtung der Stapeltrageplatte 18 bzw. des Bodens 19 der Kanalerweiterungskammer 12 weisenden Plattenlängsausnehmungen 17, 17' in das Gehäuseteil 3 eingelegt sind. Im Bereich des Dichtungselementes 21 ist nochmals das Gehäusespaltmaß 49 der Leiterplatte 5 gegenüber dem Gehäuse 3 sichtbar.

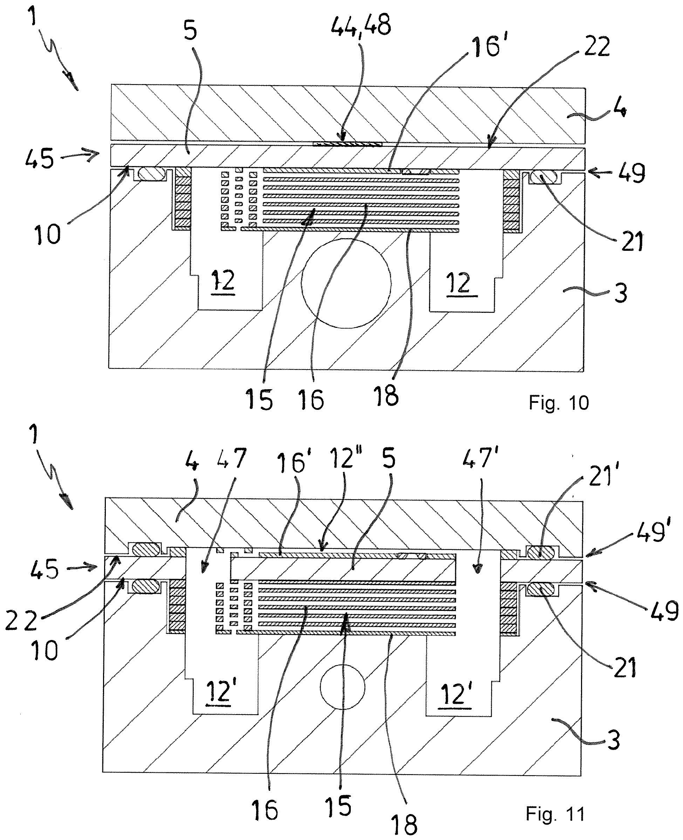

Wie aus den Figuren 8, 9 ersichtlich, steht der Einlegeplattenstapel 15 über die Kanalerweiterungskammer 12 vor, wobei das Gehäuseteil 4, das den Einlegeplattenstapel 15 presst, eben ausgebildet und an der dem Gehäuseteil 3 abgewandten Flachseite 22 der Leiterplatte 5 in Anlage ist. Bei dem in der Figur 10 gezeigten Variante weist die Leiterplatte 5 auf der Flachseite 22 eine Verdickung 44 auf. Dabei weist die Leiterplatte 5 jeweils ein definiertes Gehäusespaltmaß 49 zumindest im Bereich des Dichtungselementes 21 zu dem die Kanalerweiterungskammer 2 aufweisenden Gehäuseteil 3 auf. Bei dem in der Figur 5 dargestellten Ausführungsbeispiel weist das Gehäuseteil 4, das die Leiterplatte 5 gegen das die Kanalerweiterungskammer 12 mit dem darin aufgenommenen Einlegeplattenstapel 15 aufweisenden Gehäuseteil 3 drückt, zusätzlich noch ein definiertes Gehäusespaltmaß 49' zu der Leiterplatte 5 auf, das durch die Verdickung 44 bedingt ist. Diese Maßnahmen stellen sicher, dass zum einen die Kanalerweiterungskammer 12 nach außen dicht abgeschlossen und zum anderen der Messkanalzweig 38 und die Umgehungskanalzweige 36 in Fließrichtung des Fluids seitlich einander gegenüber abgegrenzt sind. Die Einlegeplatten 16, 16' werden aufeinandergepresst, dabei aber nicht wesentlich deformiert, und die Flächenpressung kann dabei ortsabhängig unterschiedlich hoch ausfallen. Aus diesem Grund gibt es einen zweiten, davon unabhängigen, dichten Verschluss mit dem formbaren Dichtungselement 21 im Gehäusespalt 45 zwischen Gehäuseteil 3 und Leiterplatte 5. Ein absolut dichter Verschluss zwischen den Einlegeplatten 16, 16' ist nicht notwendig, da das Aufeinanderpressen nur sicherstellen soll, dass sich, wie ausgeführt, kein unerwünschter, parasitärer Kanalzweig ausbildet. Das lässt sich sogar dann erreichen, wenn die Hohlräume rund um den Einlegeplattenstapel 15 durch ein oder mehrere gezielte Öffnungen belüftet werden, solange dadurch kein Umgehungskanalzweig entsteht.

Die Figur 10 zeigt eine Variante der Durchflussmengenmesseinheit 1 gemäß Figur 1 in einer Querschnittsdarstellung, bei der die Leiterplatte 5 im Bereich des Gehäuses 2 zentral eine Verdickung 44 oder das Gehäuseteil 4 zentral eine Erhebung 48 aufweist. Ansonsten entspricht diese Variante der in der Figur 9 beschriebenen Ausführungsform. Über die zentrale Verdickung 44 der Leiterplatte 5, die an dem Gehäuseteil 4 in Anlage ist, oder über zentrale Erhebung 48, die an der Leiterplatte 5 in Anlage ist, drückt das Gehäuseteil 4 die Leiterplatte 5 bei mit dem Gehäuseteil 4 verschraubten Gehäuseteil 3 in Richtung der Kanalerweiterungskammer 12 des Gehäuseteils 3 des Gehäuses 2.

In der Figur 11 ist ein weiteres Ausführungsbeispiel der erfindungsgemäßen Durchflussmengenmesseinheit 1 aus Figur 1 dargestellt, bei der die Leiterplatte 5 zwischen den Einlegeplatten 16, 16' des Einlegeplattenstapels 15 angeordnet ist. Die Leiterplatte 5 unterteilt den Einlegeplattenstapel 15 in einen oberen und einen unteren Teilstapel. Dabei erstreckt sich die Kanalerweiterungskammer 12 mit einem ersten Kanalerweiterungskammerabschnitt 12' im Gehäuse 3 und mit einem zweiten Kanalerweiterungskammerabschnitt 12" im Gehäuse 4. Sie weist zudem Durchleitöffnungen 47, 47' für das Fluid im Bereich des Verzweigungskanals 34 bzw. des Mündungskanals 35 auf. Die Gehäuseteile 3, 4 sind mit dazwischenliegender Leiterplatte 5 übereinandergeschichtet angeordnet, wobei die Gehäuseteile 3, 4 nicht sichtbar verschraubt sind. Das Gehäuseteil 4 presst die Einlegeplatte 16' gegen die zweite Flachseite 22 der Leiterplatte 5 und die Einlegeplatte 16' den nur aus Einlegeplatten 16 gebildeten Einlegeplattenstapel 15 gegen die Stapeltrageplatte 18 sowie das Gehäuseteil 3. Dabei ist zwischen dem Gehäuseteil 3 ein erstes Dichtungselement 21 angeordnet, das den ersten Kanalerweiterungskammerabschnitt 12' im Gehäuse 3 nach außen abdichtet. Des Weiteren ist zwischen dem Gehäuseteil 4 ein zweites Dichtungselement 21' angeordnet, das den zweiten Kanalerweiterungskammerabschnitt 12" im Gehäuse 43 nach außen abdichtet. Auch hier ist zwischen den miteinander verbundenen Gehäuseteilen 3, 4 außerhalb der Kanalerweiterungskammer 12 ein Gehäusespalt 45 ausgebildet, wobei der Einlegeplattenstapel 15 unter Bildung des Gehäusespaltes 45 zwischen den zwei Gehäuseteilen 3, 4 geklemmt ist. Das Dichtungselement 21 ist unter Bildung eines bestimmten Gehäusespaltmaßes 49 zwischen dem Gehäuseteil 3 und der ersten Flachseite 10 der Leiterplatte 5 gepresst, während das Dichtungselement 21' unter Bildung eines bestimmten Gehäusespaltmaßes 49' zwischen dem Gehäuseteil 4 und der zweiten Flachseite 22 der Leiterplatte 5 gepresst ist. Ansonsten ist diese Ausführungsform entsprechend der vorstehend beschriebenen Ausführungsform ausgebildet, bei der die Leiterplatte auf die obere Einlegeplatte 16' drückt und die Kanalerweiterungskammer 12 nur in dem Gehäuseteil 3 ausgebildet ist. Figur 11 zeigt eine Ausgestaltung bei der lediglich die Einlegeplatte 16' sich in der Figur oberhalb der Leiterplatte 5 befindet. Dies können auch noch zusätzliche Einlegeplatten 16 sein, wodurch sich die Kanalerweiterungskammer 12 deutlich auch in das Gehäuseteil 4 erstrecken kann.

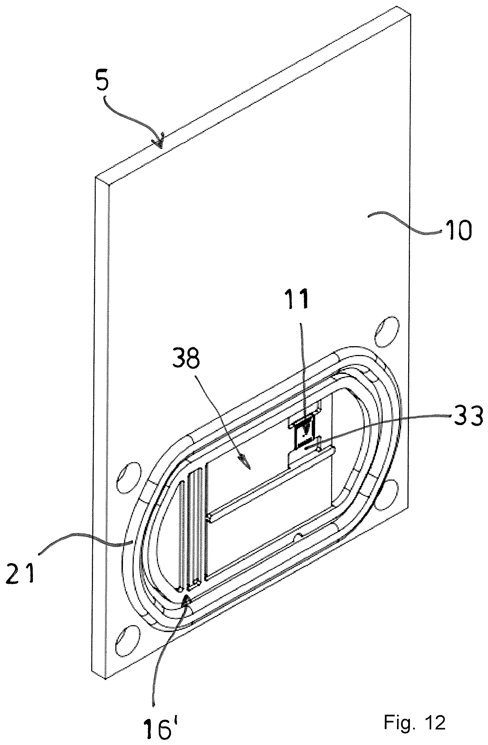

Die Figur 12 zeigt nochmals die Leiterplatte 5 der Durchflussmengenmesseinheit 1 aus Figur 3 mit Blick auf das Substrat 11 mit der Sensoranordnung. Auch hier ist nochmals verdeutlicht, dass der Messkanalzweig 38 und das Substrat 11 mit der Sensoranordnung von der Dichtung 21 umgriffen sind. Das Substrat 11 mit der Sensoranordnung ist auf der ersten Flachseite 10 der Leiterplatte 5 angeordnet und greift in des Plattenfensters 33 der Einlegeplatte 16' ein. Das Substrat 11 mit der Sensoranordnung ragt nicht in dem Messkanalzweig 38 hinein, sondern schließt mit diesem bündig ab, sodass eine laminare Strömung in dem Messkanalzweig 38 sichergestellt ist. Die Leiterplatte 5 trägt eine in der Figur 11 nicht dargestellte elektronische Schaltung zur Verarbeitung eines Messsignals der Sensoranordnung des Substrats 11 und weist zudem nicht abgebildete Leiterbahnen als Verbindungsleitungen auf, die zu dem Substrat 11 führen.

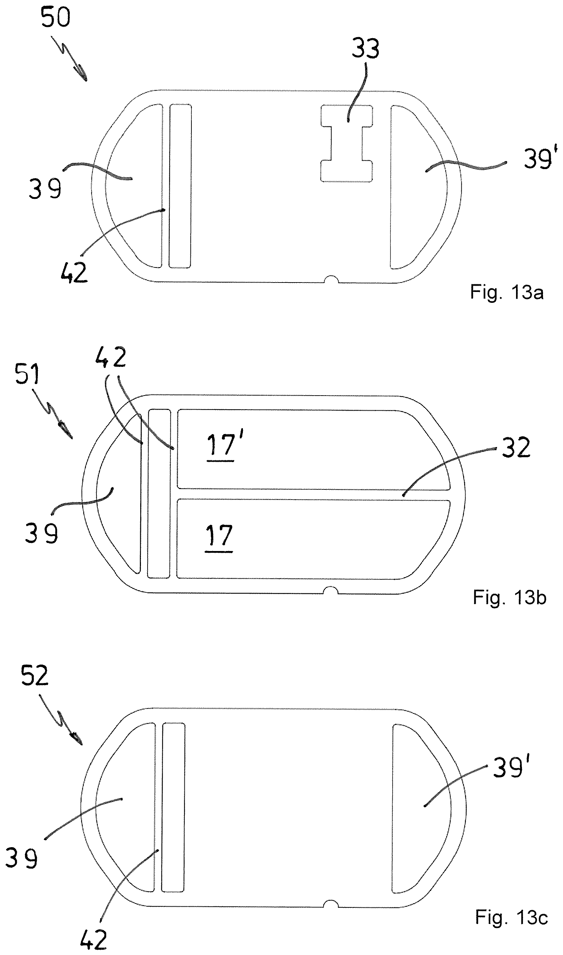

Figur 13 zeigt beispielhaft drei unterschiedliche Arten von Einlegeplatten 50, 51 und 52, die jeweils in abwechselnder Folge entsprechend angeordnet werden können, um den Plattenstapel 15 zu bilden. Figur 13a zeigt die eine Art als ebene Einlegeplatte 50 ohne Plattenlängsausnehmungen, wobei hier die Einlegeplatte 50 des Plattenstapels 15 mit einem Plattenfenster 33 für den Halbleiterchip dargestellt ist. Bei der anderen Art der ebenen Platten 52 gemäß Figur 13c fehlt diese Plattenfenster 33. Figur 13b zeigt die dritte Art als Einlegeplatte 51 mit Plattenlängsausnehmungen 17, 17', die als Plattenlängsdurchbrüche ausgeführt sind. Bei dieser Ausgestaltung wird somit eine Einlegeplatte 16', wie sie in den Figuren 6b gezeigt ist, durch zwei Einlegeplatten 50, 51 und eine Einlegeplatte 16 wie sie in der Figuren 6a gezeigt ist, durch zwei Einlegeplatten 51, 52 ersetzt. Die Einlegeplatten 50, 51, 52 weisen alle vorstehend beschrieben Elemente mit entsprechenden Bezugsziffern auf. Die Einlegeplatten 50, 51, 52 sind als Stanzteile ausgebildet. Der Plattenlängssteg 32 in der Einlegeplatte 51 bildet zusammen mit dem Plattendurchbruch 39 der Einlegeplatte 51 den Mündungskanal 35. Dieser wird in diesem Fall durch den Plattenlängssteg 32 geteilt, wobei jedoch zwischen den dadurch entstehenden beiden Bereichen des Mündungskanals 35 eine Verbindung besteht, weil die einzelnen Plattenlängsstege 32 aufgrund der Anordnung im Stapel 15 einen Abstand zueinander aufweisen.

## Patentansprüche

1. Durchflussmengenmesseinheit (1, 1') zur Feststellung der Durchflussmenge eines Fluids, mit einem Gehäuse (2), das mindestens zwei miteinander verbindbare Gehäuseteile (3, 4) umfasst, in dem sich von einem Gehäuseeinlass (7) zu einem Gehäuseauslass (8) des Gehäuses (2) ein Durchflusskanal (9) zumindest in einem der Gehäuseteile (3, 4) erstreckt, der in einem Zwischenbereich (37) einen Messkanalzweig (38) und mindestens einen Umgehungskanalzweig (36) aufweist,
wobei
- der Durchflusskanal (9) in dem Zwischenbereich (37) eine Kanalerweiterungskammer (12) aufweist, in der ein Einlegeplattenstapel (15) aus mindestens zwei Einlegeplatten (16, 16') angeordnet ist, die den mindestens einen Umgehungskanalzweig (36) bilden,
- an einer Wand des Messkanalzweigs (38) mindestens eine auf einem Substrat (11) angeordnete elektrische Sensoranordnung angeordnet ist,
- der Durchflusskanal (9) in der Kanalerweiterungskammer (12) einen Verzweigungskanal (34), von dem der mindestens eine Umgehungskanalzweig (36) orthogonal abzweigt, und einen Mündungskanal (35), in den der mindestens eine Umgehungskanalzweig (36) orthogonal mündet, aufweist, und
- zumindest ein Teil der Einlegeplatten (16, 16') in einem Mittelbereich (46) zumindest eine in Längsrichtung der Einlegeplatten (16, 16') verlaufende Plattenlängsausnehmung (17, 17') als Umgehungskanalzweig (36) aufweist,
**dadurch gekennzeichnet, dass**
- der Messkanalzweig (38) von mindestens einer Einlegeplatte (16, 16') des Einlegeplattenstapels (15) mit mindestens einer in Längsrichtung der Einlegeplatte (16, 16') verlaufenden Plattenlängsausnehmung (17, 17') gebildet ist,
- der Messkanalzweig (38) sich parallel zu dem mindestens einen Umgehungskanalzweig (36) erstreckt, wobei der Messkanalzweig (38) in der Kanalerweiterungskammer (12) orthogonal von dem Verzweigungskanal (34) abzweigt und anschließend orthogonal in den Mündungskanal (35) einmündet, und
- der Messkanalzweig (38) und der mindestens eine Umgehungskanalzweig (36) sich nebeneinander oder übereinander erstrecken.

2. Durchflussmengenmesseinheit nach Anspruch 1, **dadurch gekennzeichnet, dass** die Einlegeplatten (16, 16') Plattenendbereiche (40, 40') mit jeweils einem Plattendurchbruch (39, 39') aufweisen, wobei die Plattendurchbrüche (39, 39') in dem Einlegeplattenstapel (15) den Verzweigungskanal (34) und den Mündungskanal (35) bilden, und wobei der mindestens eine Umgehungskanalzweig (36) und der Messkanalzweig (38) mit Abstand zueinander längs des Verzweigungskanals (34) verzweigen und längs des Mündungskanal (35) einmünden.

3. Durchflussmengenmesseinheit nach Anspruch 1 oder 2, **dadurch gekennzeichnet, dass**
- der Einlegeplattenstapel (15) mindestens zwei unterschiedliche Arten von Einlegeplatten (16, 16') aufweist, die jeweils in abwechselnder Folge angeordnet sind, wobei eine Art als ebene Einlegeplatte (16, 16') ohne Plattenlängsausnehmungen (17, 17') und die andere Art als ebene Einlegeplatte (16, 16') mit Plattenlängsausnehmungen (17, 17') ausgebildet ist, die als Plattenlängsdurchbrüche ausgeführt sind,
oder
- der Einlegeplattenstapel (15) nur eine Art von Einlegeplatten (16, 16') aufweist, die als profilierte Einlegeplatte (16, 16') mit Plattenlängsausnehmungen (17, 17') ausgebildet sind, die als Plattenlängsnuten ausgeführt sind.

4. Durchflussmengenmesseinheit nach einem der vorstehenden Ansprüche , **dadurch gekennzeichnet, dass** die Plattenlängsausnehmungen (17, 17') der Einlegeplatte (16, 16'), die den Messkanalzweig (38) und mindestens einen Umgehungskanalzweig (36) bilden, und/oder die Plattenlängsausnehmungen (17, 17') der mindestens einen Einlegeplatte (16, 16'), die nur Umgehungskanalzweige (36) bilden, eine einheitliche Querschnittsform aufweisen.

5. Durchflussmengenmesseinheit nach einem der vorstehenden Ansprüche, **dadurch gekennzeichnet, dass** alle Einlegeplatten (16, 16') des Einlegeplattenstapels (15) zumindest in ihrer Kontur gleich ausgebildet sind, wobei der Messkanalzweig (38) und der mindestens eine Umgehungskanalzweig (36) eine gleiche Querschnittsform und eine gleiche Länge aufweisen.

6. Durchflussmengenmesseinheit nach einem der vorstehenden Ansprüche, **dadurch gekennzeichnet, dass** der Einlegeplattenstapel (15) sich mit einer Stirnseite, die von dem die Sensoranordnung aufweisenden Substrat (11) abgewandt ist, auf einer Stapeltrageplatte (18) abstützt.

7. Durchflussmengenmesseinheit nach einem der vorstehenden Ansprüche, **dadurch gekennzeichnet, dass** die Einlegeplatten (16, 16') des Einlegeplattenstapels (15) zumindest ein an die jeweilige Einlegeplatte (16, 16') angeformtes Turbulenzfilter (41) aufweisen, das jeweils vor dem Messkanalzweig (38) und/oder den Umgehungskanalzweigen (36) der Einlegeplatte (16, 16') an den jeweiligen Eintrittsbereichen angeordnet ist und sich bis in den Verzweigungskanal (34) erstreckt, wobei das Turbulenzfilter (41) als mindestens eine Plattenquerlamelle oder als ein Plattengitter (42), vorzugsweise höhenversetzt zu den Plattenlängsausnehmungen (17, 17') der Einlegeplatte (16, 16') angeordnet, ausgebildet ist.

8. Durchflussmengenmesseinheit nach einem der vorstehenden Ansprüche, **dadurch gekennzeichnet, dass** die den Messkanalzweig (38) und/oder den mindestens einen Umgehungskanalzweig (36) aufweisenden Einlegeplatten (16, 16') des Einlegeplattenstapels (15) durch das mindestens eine andere Gehäuseteil (3, 4) bei verbundenen Gehäuseteilen (3, 4) zumindest in einem die Plattenlängsausnehmungen (17, 17') und/oder die Plattendurchbrüche (39, 39') umschließenden Bereich gepresst sind, wobei zwischen den miteinander verbundenen Gehäuseteilen (3, 4) außerhalb der Kanalerweiterungskammer (12) ein Gehäusespalt (45) ausgebildet ist, und die Einlegeplatten (16, 16') definiert aufeinander liegen und der Einlegeplattenstapel (15) unter Bildung eines Gehäusespaltmaßes zwischen den mindestens zwei Gehäuseteilen (3, 4) geklemmt ist.

9. Durchflussmengenmesseinheit nach Anspruch 8, **dadurch gekennzeichnet, dass** der Einlegeplattenstapel (15) über die Kanalerweiterungskammer (12) vorsteht und/oder das andere Gehäuseteil (3, 4), das den Einlegeplattenstapel (15) presst, zumindest mittig eine Erhebung (48) aufweist.

10. Durchflussmengenmesseinheit nach Anspruch 8 oder 9, **gekennzeichnet durch** mindestens ein den Gehäusespalt (45) dichtendes formbares Dichtungselement (21), vorzugsweise einen Dichtring (21), eine Flachdichtung oder einen Klebstoff.

11. Durchflussmengenmesseinheit nach einem der vorstehenden Ansprüche, **dadurch gekennzeichnet, dass**
- der Durchflusskanal (9) in einem der Gehäuseteile (3, 4) angeordnet ist,
- das die Kanalerweiterungskammer (12) nur in dem den Durchflusskanal (9) aufweisenden Gehäuseteil (3, 4) angeordnet ist, und
- elektrische Verbindungsleitungen zu der von dem Substrat (11) getragenen Sensoranordnung zwischen den Gehäuseteilen (3, 4) aus dem Gehäuse (2) herausgeführt sind.

12. Durchflussmengenmesseinheit nach einem der vorstehenden Ansprüche, **dadurch gekennzeichnet, dass** zwischen dem die Kanalerweiterungskammer (12) aufweisenden Gehäuseteil (3, 4) und dem mindestens einen anderen Gehäuseteil (3, 4) eine Leiterplatte (5) angeordnet ist, die zumindest das Substrat (11) mit der Sensoranordnung trägt und die Verbindungsleitungen zu dem Substrat (11) mit der Sensoranordnung aufweist, wobei die Leiterplatte (5) in dem Gehäusespalt (45) zwischen den Gehäuseteilen (3, 4) angeordnet ist.

13. Durchflussmengenmesseinheit nach Anspruch 12, **dadurch gekennzeichnet, dass** das andere Gehäuseteil (3, 4) die Leiterplatte (5) gegen Einlegeplattenstapel (15) presst.

14. Durchflussmengenmesseinheit nach einem der vorstehenden Ansprüche 1 bis 11, **dadurch gekennzeichnet, dass** die Leiterplatte (5) zwischen Einlegeplatten (16, 16') des Einlegeplattenstapels (15) angeordnet ist und den Einlegeplattenstapel (15) sowie die Kanalerweiterungskammer (12) unterteilt und Durchleitöffnungen (47, 47') im Bereich des Verzweigungskanals (34) bzw. des Mündungskanals (35) aufweist.

15. Durchflussmengensteuereinheit (13) zur Steuerung der Durchflussmenge eines Fluids, mit einer Durchflussmengenmesseinheit (1'), die mindestens einen Messkanalzweig (38) mit einer auf einem Substrat (11) angeordneten elektrischen Sensoranordnung aufweist, und mit einer elektrisch betätigbaren Ventileinheit (14) zur Steuerung des Fluids, **gekennzeichnet durch** eine Durchflussmengenmesseinheit (1') nach einem der vorstehenden Ansprüche 1 bis 14, wobei die Ventileinheit (14) in Reihe mit der Durchflussmengenmesseinheit (1') geschaltet ist und die Sensoranordnung des Substrates (11) und die Ventileinheit (14) mit einer elektronischen Steuerung elektrisch verbunden sind.

## Claims

1. A flow rate measuring unit (1, 1') for establishing the flow rate of a fluid, with a housing (2), which includes at least two housing parts (3, 4) that can be connected to one another and in which a flow passage (9) extends at least in one of the housing parts (3, 4) from a housing inlet (7) to a housing outlet (8) of the housing (2), the flow passage in an intermediate region (37) comprising a measuring channel branch (38) and at least one bypass channel branch (36),
whereby
- the flow passage (9), in the intermediate region (37), comprises a channel widening chamber (12), in which an insert plate stack (15) composed of at least two insert plates (16, 16') is disposed, which form the at least one bypass channel branch (36),
- at least one electric sensor system disposed on a substrate (11) is arranged on a wall of the measuring channel branch (38),
- in the channel widening chamber (12), the flow passage (9) comprises a branch channel (34) from which the at least one bypass channel branch (36) branches off orthogonally, and a mouth channel (35), into which the at least one bypass channel branch (36) opens orthogonally, and
- at least some of the insert plates (16, 16') in a center region (46) have at least one plate-longitudinal recess (17, 17') extending in the longitudinal direction of the insert plates (16, 16') serving as the bypass channel branch (36),
**characterized in that**
- the measuring channel branch (38) is formed by at least one insert plate (16, 16') of the insert plate stack (15) including at least one plate-longitudinal recess (17, 17') extending in the longitudinal direction of the insert plate (16, 16'),
- the measuring channel branch (38) extends parallel to the at least one bypass channel branch (36), in which, in the channel widening chamber (12), the measuring channel branch (38) branches orthogonally off the branch channel (34) and subsequently opens orthogonally into the mouth channel (35), and
- the measuring channel branch (38) and the at least one bypass channel branch (36) extend next to or on top of one another.

2. The flow rate measuring unit according to claim 1, **characterized in that** the insert plates (16, 16') include plate end regions (40, 40') that each have a plate aperture (39, 39'), whereby the plate apertures (39, 39') in the insert plate stack (15) form the branch channel (34) and the mouth channel (35), and whereby the at least one bypass channel branch (36) and the measuring channel branch (38) branch lengthwise off the branch channel (34) at a distance from one another and open lengthwise into the mouth channel (35).

3. The flow rate measuring unit according to claim 1 or 2, **characterized in that**
- the insert plate stack (15) comprises at least two different types of insert plates (16, 16'), which are each disposed in alternating sequence, whereby one type is designed as a flat insert plate (16, 16') having no plate-longitudinal recesses (17, 17'), and the other type is designed as a flat insert plate (16, 16') having plate-longitudinal recesses (17, 17') designed as plate-longitudinal apertures,
or
- the insert plate stack (15) comprises only one type of insert plates (16, 16'), which are designed as profiled insert plates (16, 16') having plate-longitudinal recesses (17, 17') designed as plate-longitudinal grooves.

4. The flow rate measuring unit according to any one of the preceding claims, **characterized in that** the plate-longitudinal recesses (17, 17') of the insert plate (16, 16') which form the measuring channel branch (38) and at least one bypass channel branch (36), and/or the plate-longitudinal recesses (17, 17') of the at least one insert plate (16, 16') which form only bypass channel branches (36), have a uniform cross-sectional shape.

5. The flow rate measuring unit according to any one of the preceding claims, **characterized in that** all insert plates (16, 16') of the insert plate stack (15) are designed identically at least in terms of the contour thereof, whereby the measuring channel branch (38) and the at least one bypass channel branch (36) have an identical cross-sectional shape and an identical length.

6. The flow rate measuring unit according to any one of the preceding claims, **characterized in that** an end face of the insert plate stack (15), which faces away from the substrate (11) comprising the sensor system, is supported on a stack support plate (18).

7. The flow rate measuring unit according to any one of the preceding claims, **characterized in that** the insert plates (16, 16') of the insert plate stack (15) comprise at least one turbulence filter (41), which is integrally formed on the respective insert plate (16, 16') and which is disposed in each case upstream of the measuring channel branch (38) and/or the bypass channel branches (36) of the insert plate (16, 16') on the respective inlet regions and extends into the branch channel (34), whereby the turbulence filter (41) is designed as at least one plate-transverse lamella or as a plate mesh (42), preferably vertically offset from the plate-longitudinal recesses (17, 17') of the insert plate (16, 16').

8. The flow rate measuring unit according to any one of the preceding claims, **characterized in that** the insert plates (16, 16') of the insert plate stack (15) comprising the measuring channel branch (38) and/or the at least one bypass channel branch (36) are pressed by the at least one other housing part (3, 4), in the case of connected housing parts (3, 4), at least in one region enclosing the plate-longitudinal recesses (17, 17') and/or the plate apertures (39, 39'), whereby a housing gap (45) is formed outside the channel widening chamber (12) between the connected housing parts (3, 4), the insert plates (16, 16') are situated on top of one another in a defined manner, and the insert plate stack (15) is clamped between the at least two housing parts (3, 4), forming a housing gap dimension.

9. The flow rate measuring unit according to claim 8, **characterized in that** the insert plate stack (15) protrudes over the channel widening chamber (12), and/or the other housing part (3, 4), which presses the insert plate stack (15), includes an elevation (48) at least in the center.

10. The flow rate measuring unit according to claim 8 or 9, **characterized by** at least one shapeable sealing element (21) sealing the housing gap (45), which is preferably a sealing ring (21), a flat seal or an adhesive.

11. The flow rate measuring unit according to any one of the preceding claims, **characterized in that**
- the flow passage (9) is disposed in one of the housing parts (3, 4),
- the channel widening chamber (12) is disposed only in the housing part (3, 4) including the flow passage (9), and
- electrical connecting lines for the sensor system carried by the substrate (11) are routed out of the housing (2) between the housing parts (3, 4).

12. The flow rate measuring unit according to any one of the preceding claims, **characterized in that** a printed circuit board (5), which carries at least the substrate (11) comprising the sensor system and comprises the connecting lines for the substrate (11) comprising the sensor system, is disposed between the housing part (3, 4) including the channel widening chamber (12) and the at least one other housing part (3, 4), wherein the printed circuit board (5) is disposed in the housing gap (45) between the housing parts (3, 4).

13. The flow rate measuring unit according to claim 12, **characterized in that** the other housing part (3, 4) presses the printed circuit board (5) against the insert plate stack (15).

14. The flow rate measuring unit according to any one of the preceding claims 1 to 11, **characterized in that** the printed circuit board (5) is disposed between insert plates (16, 16') of the insert plate stack (15) and divides the insert plate stack (15) and the channel widening chamber (12), and comprises through-conducting openings (47, 47') in the region of the branch channel (34) or of the mouth channel (35).

15. A flow rate control unit (13) for controlling the flow rate of a fluid, comprising a flow rate measuring unit (1'), which comprises at least one measuring channel branch (38) including an electric sensor system disposed on a substrate (11), and an electrically actuable valve unit (14) for controlling the fluid, **characterized by** a flow rate measuring unit (1') according to any one of the preceding claims 1 to 14, whereby the valve unit (14) is connected in series with the flow rate measuring unit (1'), and the sensor system of the substrate (11) and the valve unit (14) are electrically connected to an electronic control unit.

## Revendications

1. Unité de mesure de débit (1, 1') pour détecter le débit d'un fluide, comportant un boîtier (2) qui comprend au moins deux parties de boîtier (3, 4) pouvant être assemblées, dans lequel un canal d'écoulement (9) s'étend d'une entrée de boîtier (7) à une sortie de boîtier (8) du boîtier (2) au moins dans l'une des parties de boîtier (3, 4), lequel présente, dans une zone intermédiaire (37), une branche de canal de mesure (38) et au moins une branche de canal de dérivation (36),
dans lequel
- le canal d'écoulement (9) dans la zone intermédiaire (37) présente une chambre d'extension de canal (12) dans laquelle est disposé un empilement de plaques d'insertion (15) composé d'au moins deux plaques d'insertion (16, 16') qui forment ladite au moins une branche de canal de dérivation (36),
- au moins un dispositif capteur électrique est disposé sur un substrat (11) sur une paroi de la branche de canal de mesure (38),
- le canal d'écoulement (9) présente dans la chambre d'extension de canal (12) un canal de bifurcation (34), dont bifurque orthogonalement ladite au moins une branche de canal de dérivation (36), et un canal de débouché (35), dans lequel débouche orthogonalement ladite au moins une branche de canal de dérivation (36), et
- au moins une partie des plaques d'insertion (16, 16') présente dans une zone centrale (46) au moins un évidement longitudinal de plaque (17, 17') s'étendant dans la direction longitudinale des plaques d'insertion (16, 16') en tant que branche de canal de dérivation (36),
**caractérisée en ce que**
- la branche de canal de mesure (38) est formée par au moins une plaque d'insertion (16, 16') de l'empilement de plaques d'insertion (15) présentant au moins un évidement longitudinal de plaque (17, 17') s'étendant dans la direction longitudinale de la plaque d'insertion (16, 16'),
- la branche de canal de mesure (38) s'étend parallèlement à ladite au moins une branche de canal de dérivation (36), la branche de canal de mesure (38) dans la chambre d'extension de canal (12) bifurquant orthogonalement du canal de bifurcation (34) et débouchant ensuite orthogonalement dans le canal de débouché (35), et
- la branche de canal de mesure (38) et ladite au moins une branche de canal de dérivation (36) s'étendant l'une à côté de l'autre ou l'une au-dessus de l'autre.

2. Unité de mesure de débit selon la revendication 1, **caractérisée en ce que** les plaques d'insertion (16, 16') présentent des zones d'extrémité de plaque (40, 40') avec chaque fois une ouverture de plaque (39, 39'), les ouvertures de plaque (39, 39') dans l'empilement de plaques d'insertion (15) formant le canal de bifurcation (34) et le canal de débouché (35), et ladite au moins une branche de canal de dérivation (36) et la branche de canal de mesure (38) bifurquant le long du canal de bifurcation (34) et débouchant le long du canal de débouché (35) à distance l'une de l'autre.

3. Unité de mesure de débit selon la revendication 1 ou 2, **caractérisée en ce que**
- l'empilement de plaques d'insertion (15) présente au moins deux types différents de plaques d'insertion (16, 16') qui se succèdent alternativement, un type étant conçu comme plaque d'insertion plane (16, 16') sans évidements longitudinaux de plaque (17, 17') et l'autre type comme plaque d'insertion plane (16, 16') avec des évidements longitudinaux de plaque (17, 17') qui sont réalisés sous la forme d'ouvertures longitudinales de plaque,
ou
- l'empilement de plaques d'insertion (15) présente un seul type de plaques d'insertion (16, 16') qui sont conçues comme des plaque d'insertion profilées (16, 16') avec des évidements longitudinaux de plaque (17, 17') qui sont réalisés sous la forme de rainures longitudinales de plaque.

4. Unité de mesure de débit selon l'une des revendications précédentes, **caractérisée en ce que** les évidements longitudinaux de plaque (17, 17') de la plaque d'insertion (16, 16') qui forment la branche de canal de mesure (38) et au moins une branche de canal de dérivation (36) et/ou les évidements longitudinaux de plaque (17, 17') de ladite au moins une plaque d'insertion (16, 16') qui forment seulement des branches de canal de dérivation (36) présentent une forme en section transversale uniforme.

5. Unité de mesure de débit selon l'une des revendications précédentes, **caractérisée en ce que** toutes les plaques d'insertion (16, 16') de l'empilement de plaques d'insertion (15) sont identiques au moins dans leur contour, la branche de canal de mesure (38) et ladite au moins une branche de canal de dérivation (36) présentant une même forme en section transversale et une même longueur.

6. Unité de mesure de débit selon l'une des revendications précédentes, **caractérisée en ce que** l'empilement de plaques d'insertion (15) s'appuie, par une face frontale opposée au substrat (11) présentant le dispositif capteur, sur une plaque support d'empilement (18).

7. Unité de mesure de débit selon l'une des revendications précédentes, **caractérisée en ce que** les plaques d'insertion (16, 16') de l'empilement de plaques d'insertion (15) présentent au moins un filtre de turbulences (41) formé sur la plaque d'insertion (16, 16') respective, qui est chaque fois disposé avant la branche de canal de mesure (38) et/ou les branches de canal de dérivation (36) de la plaque d'insertion (16, 16') dans les zones d'entrée respectives et s'étend jusque dans le canal de bifurcation (34), le filtre de turbulences (41) étant conçu comme au moins une lamelle transversale de plaque ou comme une grille de plaque (42), de préférence décalée en hauteur par rapport aux évidements longitudinaux de plaque (17, 17') de la plaque d'insertion (16, 16').

8. Unité de mesure de débit selon l'une des revendications précédentes, **caractérisée en ce que** les plaques d'insertion (16, 16') de l'empilement de plaques d'insertion (15) présentant la branche de canal de mesure (38) et/ou ladite au moins une branche de canal de dérivation (36) sont pressées par ladite au moins une autre partie de boîtier (3, 4), lorsque les parties de boîtier (3, 4) sont assemblées, au moins dans une zone entourant les évidements longitudinaux de plaque (17, 17') et/ou les ouvertures de plaque (39, 39'), une fente de boîtier (45) étant formée à l'extérieur de la chambre d'extension de canal (12) entre les parties de boîtier (3, 4) assemblées, et les plaques d'insertion (16, 16') reposant les uns sur les autres de manière définie et l'empilement de plaques d'insertion (15) étant serré entre lesdites au moins deux parties de boîtier (3, 4) en formant un jeu d'ouverture de boîtier.

9. Unité de mesure de débit selon la revendication 8, **caractérisée en ce que** l'empilement de plaques d'insertion (15) dépasse de la chambre d'extension de canal (12) et/ou l'autre partie de boîtier (3, 4) qui presse l'empilement de plaques d'insertion (15) présente, au moins au centre, une surélévation (48).

10. Unité de mesure de débit selon la revendication 8 ou 9, **caractérisée par** au moins un élément d'étanchéité déformable (21) rendant la fente de boîtier (45) étanche, de préférence une bague d'étanchéité (21), un joint plat ou une colle.

11. Unité de mesure de débit selon l'une des revendications précédentes, **caractérisée en ce que**
- le canal d'écoulement (9) est disposé dans l'une des parties de boîtier (3, 4),
- la chambre d'extension de canal (12) est disposée seulement dans la partie de boîtier (3, 4) présentant le canal d'écoulement (9), et
- des lignes de connexion électrique allant au dispositif capteur porté par le substrat (11) sortent du boîtier (2) entre les parties de boîtier (3, 4).

12. Unité de mesure de débit selon l'une des revendications précédentes, **caractérisée en ce qu'**une carte de circuit imprimé (5) est disposée entre la partie de boîtier (3, 4) présentant la chambre d'extension de canal (12) et ladite au moins une autre partie de boîtier (3, 4), qui porte au moins le substrat (11) avec le dispositif capteur et présente les lignes de connexion allant au substrat (11) avec le dispositif capteur, la carte de circuit imprimé (5) étant disposée dans la fente de boîtier (45) entre les parties de boîtier (3, 4).

13. Unité de mesure de débit selon la revendication 12, **caractérisée en ce que** l'autre partie de boîtier (3, 4) presse la carte de circuit imprimé (5) contre l'empilement de plaques d'insertion (15).

14. Unité de mesure de débit selon l'une des revendications précédentes 1 à 11, **caractérisée en ce que** la carte de circuit imprimé (5) est disposée entre des plaques d'insertion (16, 16') de l'empilement de plaques d'insertion (15) et subdivise l'empilement de plaques d'insertion (15) ainsi que la chambre d'extension de canal (12) et présente des ouvertures de passage (47, 47') dans la zone du canal de bifurcation (34), respectivement du canal de débouché (35).

15. Unité de commande de débit (13) pour commander le débit d'un fluide, comportant une unité de mesure de débit (1') qui présente au moins une branche de canal de mesure (38) avec un dispositif capteur électrique disposé sur un substrat (11), et avec une unité de vanne à commande électrique (14) pour commander le fluide, **caractérisée par** une unité de mesure de débit (1') selon l'une des revendications précédentes 1 à 14, l'unité de vanne (14) étant montée en série avec l'unité de mesure de débit (1') et le dispositif capteur du substrat (11) et l'unité de vanne (14) étant reliés électriquement à une commande électronique.
